(19) Europäisches Patentamt European Patent Office Office européen des brevets

(11) **EP 3 645 628 B1**

(12) **EUROPEAN PATENT SPECIFICATION**

(45) Date of publication and mention
of the grant of the patent:
**13.04.2022 Bulletin 2022/15**

(21) Application number: **18738216.3**

(22) Date of filing: **26.06.2018**

(51) International Patent Classification (IPC):
**C08L 23/14** (2006.01)     **C08F 210/06** (2006.01)

(52) Cooperative Patent Classification (CPC):
(C-Sets available)
**C08L 23/14; C08F 210/06;** C08L 2203/18;
C08L 2205/02; C08L 2205/025; C08L 2205/03
(Cont.)

(86) International application number:
**PCT/EP2018/067067**

(87) International publication number:
**WO 2019/002268 (03.01.2019 Gazette 2019/01)**

(54) **POLYPROPYLENE COMPOSITION FOR THE PRODUCTION OF HIGH PRESSURE PIPES**

POLYPROPYLENZUSAMMENSETZUNG ZUR HERSTELLUNG VON HOCHDRUCKROHREN

COMPOSITION DE POLYPROPYLÈNE POUR LA PRODUCTION DE CONDUITES HAUTE
PRESSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.06.2017 CN 201710503983**

(43) Date of publication of application:
**06.05.2020 Bulletin 2020/19**

(73) Proprietors:
• **Abu Dhabi Polymers Co. Ltd (Borouge) LLC.
Abu Dhabi (AE)**
• **Borealis AG
1020 Vienna (AT)**

(72) Inventors:
• **INEPEKOGLOU, Ioannis
Abu Dhabi (AE)**
• **TYNYS, Antti Tapio
4021 Linz (AT)**

• **FANG, Dongyu
Shanghai 201203 (CN)**

(74) Representative: **Maiwald Patent- und
Rechtsanwaltsgesellschaft mbH
Elisenhof
Elisenstraße 3
80335 München (DE)**

(56) References cited:
**EP-A1- 2 796 499     EP-A1- 3 040 364
EP-A1- 3 067 608**

(52) Cooperative Patent Classification (CPC): (Cont.)

C-Sets
**C08F 210/06;**
**C08L 23/14;**
C08F 210/06

**Description**

The present invention is directed to a polypropylene composition (C) applicable for the production of pressure pipes, said composition comprising a propylene random copolymer (rPP) and an impact modifier being a polyethylene (PE), as well as an article comprising said composition.

Polypropylene materials are frequently used for various pipe applications, such as fluid transport during which the fluid is pressurized and/or heated. In particular, polypropylene materials are used in applications for plumbing and heating, such as in-house hot and cold water pressure pipes and fittings, floor and wall heating systems and radiator connections.

In this regard, propylene random copolymers are especially suitable for pressure pipe applications for hot water and industrial pipes since propylene random copolymers are featured by good impact performance, stiffness, creep resistance, slow crack properties and long term pressure resistance.

It is well known that increasing the impact properties has a detrimental effect on the stiffness and vice versa. For high pressure pipes, however, a good balance between impact properties and stiffness is mandatory to ensure sufficient pressure resistance against internal pressure. Additionally, excellent processability of the propylene random copolymer material is required in order to facilitate pipe extrusion as well as injection moulding of fittings. To increase the stiffness of a propylene random copolymer material to the required level, the amount of comonomer in the polymer can be decreased which, however, has a negative effect on the toughness of the material. Especially random propylene polymer grades for hot and cold water applications often do not have satisfactory impact resistance, particularly at low temperatures. Another commonly used approach to improve the impact performance while keeping the stiffness on a high level is to produce block copolymers in which ethylene rich rubber particles are dispersed in a homopolypropylene matrix. But in pressure pipe applications, block copolymers are not preferred since the rubber particles are weak domains against internal pressure leading to insufficient pressure resistance of the pipes.

Alternatively, impact modifiers can be added to the propylene random copolymers to improve the impact performance which, however, also has a negative effect on the stiffness and, therefore, the pressure resistance.

Accordingly, there is a need in the art for propylene random copolymer materials showing an improved impact behavior without sacrificing the stiffness.

Therefore, it is an object of the present invention to provide a propylene random copolymer applicable for the production of pipes which have highly feasible balance between impact and stiffness properties which balance preferably contribute to to pressure resistance. Accordingly, the present invention is directed to a polypropylene composition (C), comprising

i) 80.0 to 99.9 wt.-% of a propylene random copolymer (rPP) comprising propylene and at least one comonomer being ethylene and/or a $C_4$-$C_8$ $\alpha$-olefin, said propylene random copolymer (rPP) having a melt flow rate $MFR_2$ (230 °C, 2.16 kg) determined according to ISO 1133 in the range of 0.05 to 1.0 g/10 min, and
ii) 0.1 to 20.0 wt.-% of a polyethylene (PE) having a density equal or below 940 kg/m$^3$, based on the overall weight of the polypropylene composition (C).

It was surprisingly found by the inventors that the addition of a polyethylene (PE) having a density equal or below 940 kg/m$^3$ provides highly feasible balance between impact and stiffness properties which balance preferably contribute to pressure resistance as shown in experimental part with flexural and tensile properties for stiffness property and with charpy impact properties, especially at room temperature. The preferable pressure resistance is expressed by pressure test (HPT).

According to one embodiment of the present invention, the polypropylene composition (C) has a melt flow rate $MFR_2$ (230 °C, 2.16 kg) determined according to ISO 1133 in the range of 0.05 to 1.0 g/10 min.

According to another embodiment of the present invention, the polypropylene composition (C) has a Charpy Notched Impact Strength at 23 °C of at least 15.0 kJ/m$^2$, determined according to ISO 179/1eA:2000.

According to a further embodiment of the present invention, the polypropylene composition (C) has a xylene cold soluble content (XCS) in the range of 1.0 to 15.0 wt.-%, determined according to ISO 16152.

According to still another embodiment of the present invention, wherein the ratio MFR(C) / MFR(rPP) is in the range of 0.8 to 1.3, wherein MFR(C) is the melt flow rate $MFR_2$ (230 °C, 2.16 kg) determined according to ISO 1133 of the polypropylene composition (C) and MFR(rPP) is the melt flow rate $MFR_2$ (230 °C, 2.16 kg) determined according to ISO 1133 of the propylene random copolymer (rPP).

According to one embodiment of the present invention, wherein the propylene random copolymer (rPP) has

i) a comonomer content in the range of 1.0 to 15.0 mol-% and/or
ii) a xylene cold soluble content (XCS) in the range of 1.0 to 15.0 wt.-%, determined according to ISO 16152.

According to another embodiment of the present invention, wherein the propylene random copolymer (rPP) has a melting temperature below 155 °C.

It is especially preferred that the propylene random copolymer (rPP) is monophasic as outlined in more detail below.

According to one embodiment of the present invention, the propylene random copolymer (rPP) is at least bimodal.

According to another embodiment of the present invention, the propylene random copolymer (rPP) is a bimodal propylene random copolymer (rPP-2) comprising

i) 35.0 to 55.0 wt.-% of a first propylene random copolymer (rPP-2a) having a melt flow rate $MFR_2$ determined according to ISO 1133 at 230 °C and a load of 2.16 kg in the range of 0.4 to 3.0 g/10 min, and

ii) 45.0 to 65.0 wt.-% of a second propylene random copolymer (rPP-2b) which is different from the first propylene random copolymer (rPP-2a), wherein the bimodal random copolymer (rPP-2) has an overall melt flow rate $MFR_2$ determined according to ISO 1133 at 230 °C and a load of 2.16 kg in the range of 0.01 to 5.0 g/10 min.

It is especially preferred that the a first propylene random copolymer (rPP-2a) has a comonomer content in the range of 1.0 to 5.0 mol-% and the bimodal random copolymer (rPP-2) has an overall comonomer content in the range of 3.0 to 10.0 mol-%, wherein the a first propylene random copolymer (rPP-2a) and the second propylene random copolymer (rPP-2b) are copolymers of propylene and ethylene and/or a $C_4$ to $C_8$ $\alpha$-olefin. Preferably, the first propylene random copolymer (rPP-2a) and the second propylene random copolymer (rPP-2b) are copolymers of propylene with the same comonomer(s). More preferably, the first propylene random copolymer (rPP-2a) and the second propylene random copolymer (rPP-2b) are copolymers of propylene and ethylene.

According to a further embodiment of the present invention, the propylene random copolymer (rPP) is a trimodal propylene random copolymer (rPP-3) comprising

i) 30.0 to 50.0 wt.-% of a first propylene random copolymer (rPP-3a) having a melt flow rate $MFR_2$ determined according to ISO 1133 at 230 °C and a load of 2.16 kg in the range of 0.4 to 5.0 g/10 min.

ii) 42.0 to 60.0 wt.-% of a second propylene random copolymer (rPP-3b), which is different from the first propylene random copolymer (rPP-3a) , and

iii) 1.0 to 15.0 wt.-% of a third propylene random copolymer (rPP-3c), which is different from the first propylene random copolymer (rPP-3a) and the second propylene random copolymer (rPP-3b),

wherein the overall melt flow rate $MFR_2$ determined according to ISO 1133 at 230 °C of the trimodal propylene random copolymer (rPP-3) is in the range of 0.1 to 3.0 g/10 min.

It is especially preferred that the first propylene random copolymer (rPP-3a) has a comonomer content in the range of 1.0 to 4.9 mol-%, and the trimodal propylene random copolymer (rPP-3) has an overall comonomer content in the range of 4.0 to 12.0 mol-%. Prefereably, the first propylene random copolymer (rPP-3a), the second propylene random copolymer (rPP-3b) and the third propylene random copolymer (rPP-3c) are copolymers of propylene with the same comonomer(s). More preferably, the first propylene random copolymer (rPP-3a), the second propylene random copolymer (rPP-3b) and the third propylene random copolymer (rPP-3c) are copolymers of propylene and ethylene.

According to one embodiment of the present invention, the propylene random copolymer (rPP) consists of a copolymer of propylene and ethylene comonomer.

According to another embodiment of the present invention the polyethylene (PE) has a melt flow rate $MFR_2$ determined according to ISO 1133 at 190 °C and a load of 2.16 kg in the range of 0.1 to 6.0 g/10 min.

According to still another embodiment of the present invention the polyethylene (PE) is a low density polyethylene (LDPE) being an ethylene homopolymer.

According to a further embodiment of the present invention, the sum of the propylene random copolymer (rPP) and the polyethylene (PE) is at least 80 wt.-%, based on the total amount of the polypropylene composition (C).

The present invention is also directed to an article, comprising at least 90 wt.-% of the polypropylene composition (C) as described above.

The inventive polymer composition (C) is highly suitable for pipe applications, preferably for high pressure pipe applications. Thus the article is preferably a pipe or fitting for a pipe, preferably a high pressure pipe or fitting for a high pressure pipe.

In the following, the present invention is described in more detail.

The polypropylene composition (C)

The polypropylene composition (C) according to the present invention comprises a propylene random copolymer (rPP) and a polyethylene (PE).

Accordingly, it is preferred that the polypropylene composition (C) has a rather low xylene soluble content (XCS). In particular, the polypropylene composition (C) preferably has a xylene cold soluble content (XCS) in the range of 1.0 to 15.0 wt.-%, more preferably in the range of 2.0 to 13.0 wt.-%, still more preferably in the range of 4.0 to 12.5 wt.-%, like in the range of 6.0 to 12.0 wt.-%, determined according to ISO 16152.

The polypropylene composition (C) comprises 80.0 to 99.9 wt.-%, more preferably 90.0 to 99.0 wt.-%, still more preferably 95.0 to 98.0 wt.-% of the propylene random copolymer (rPP) and 0.1 to 20.0 wt.-%, such as 0.3 to 20.0 wt.-%, more preferably 1.0 to 10.0 wt.-%, still more preferably 2.0 to 5.0 wt.-% of the polyethylene (PE), based on the overall weight of the polypropylene composition (C).

It is especially preferred that the polypropylene composition (C) according to the present invention comprises the propylene random copolymer (rPP) and the polyethylene (PE) in a weight ratio of 85:15, more preferably in a weight ratio of 90:10, still more preferably in a weight ratio of 95:5, like in a weight ratio of 98:2.

It is still more preferred that the amount of the sum of the propylene random copolymer (rPP) and the polyethylene (PE) is at least 80 wt.-%, more preferably at least 90 wt.-%, yet more preferably at least 95 wt.-%, based on the total amount of the inventive polypropylene composition (C). Preferably, the weight ratio of the propylene random copolymer (rPP) and the polyethylene (PE) is 85:15, more preferably 90:10, still more preferably of 95:5, like 98:2.

In other words, it is preferred that the inventive polypropylene composition comprises at least 80 wt.-%, more preferably at least 90 wt.-%, yet more preferably at least 95 wt.-%, based on the total amount of the inventive polypropylene composition (C), of a composition consisting of the propylene random copolymer (rPP) and the polyethylene (PE).

The polypropylene composition (C) of the present invention may include additives (AD). Accordingly, it is preferred that the polypropylene composition (C) comprises, more preferably consists of, 80.0 to 99.9 wt.-%, more preferably 90.0 to 99.0 wt.-%, still more preferably 95.0 to 98.0 wt.-% of the propylene random copolymer (rPP), 0.1 to 20.0 wt.-%, such as 0.3 to 20.0 wt.-%, more preferably 1.0 to 10.0 wt.-%, still more preferably 2.0 to 5.0 wt.-% of the polyethylene (PE) and 0.0 to 5.0 wt.-%, more preferably 0.05 to 4.0 wt.-%, still more preferably 0.1 to 3.0 wt.-% of additives (AD), based on the overall weight of the polypropylene composition (C). The additives (AD) are described in more detail below.

It is preferred that the polypropylene composition (C) of the present invention does - apart from the propylene random copolymer (rPP) and the polyethylene (PE) - not contain any further polymeric material in an amount exceeding 5.0 wt.-%, preferably in an amount exceeding 3.0 wt.-%, more preferably in an amount exceeding 2.5 wt.-%, still more preferably in an amount exceeding 1.5 wt.-%, based on the overall weight of the polypropylene composition (C). "Polymeric material" excludes herein any carrier polymer(s) of optional additive, e.g. master batch(es) of additive(s) together with the carrier polymer, optionally present in the polymer composition. Such optional carrier polymer(s) are calculated to the amount of the respective additive based on the amount (100 %) of the polymer composition.

Polymers which are part of additive mixtures, e.g. carrier polymers in masterbatches, are excluded from the definition of "polymeric material".

It is preferred that the polypropylene composition (C) according to the present invention is featured by a rather low melt flow rate. Accordingly, it is preferred that the polypropylene composition (C) has a melt flow rate $MFR_2$ (230 °C, 2.16 kg) determined according to ISO 1133 in the range of 0.05 to 1.0 g/10 min, more preferably in the range of 0.1 to 0.8 g/10 min, still more preferably in the range of 0.15 to 0.6 g/10 min, like in the range of 0.25 to 0.4 g/10 min.

Further, it is preferred that the polypropylene composition (C) is thermo mechanically stable. Therefore, the polypropylene composition (C) preferably has a melting temperature of at least 135 °C, more preferably in the range of 137 to 160 °C, still more preferably in the range of 140 to 152 °C, like in the range of 142 to 148 °C.

As outlined above, the stiffness property of the inventive polymer composition (C) is highly feasible for the production of high pressure pipes. Accordingly, it is preferred that the polypropylene composition (C) has a flexural modulus measured on injection moulded specimens according to ISO 178 of at least 700 MPa, more preferably in the range of 750 to 1200 MPa, still more preferably in the range of 800 to 1000 MPa, like in the range of 850 to 950 MPa.

Further, it is preferred that the polypropylene composition (C) shows a good impact performance. Therefore, it is preferred that the polypropylene composition (C) has a Charpy notched impact strength at 23 °C of at least 15 kJ/m$^2$, more preferably at least 20 kJ/m$^2$, still more preferably from 20 to 130 kJ/m$^2$, determined according to ISO 179/1eA:2000 and/or has a Charpy notched impact strength at 0 °C of at least 2.0 kJ/m$^2$, more preferably from 2.0 to 40 kJ/m$^2$, determined according to ISO 179/1eA:2000.

In the following, the propylene random copolymer (rPP) and the polyethylene (PE) are described in more detail.

The propylene random copolymer (rPP)

The major component of the inventive polypropylene composition (C) is a propylene random copolymer (rPP).

The term "random" indicates that the comonomer ethylene of the propylene ethylene random copolymer (rPP) is randomly distributed within the propylene copolymer. The term random is understood according to IUPAC (Glossary of basic terms in polymer science; IUPAC recommendations 1996). Thereby, a random copolymer of propylene includes a fraction, which is insoluble in xylene, i.e. xylene cold insoluble (XCU) fraction, in an amount of at least 80 wt%, still more preferably of at least 85 wt% and most preferably of at least 90 wt%, based on the total amount of the random copolymer of propylene.

As known for skilled person, random copolymer is different from heterophasic polypropylene. Generally, a heterophasic polypropylene is a propylene copolymer comprising a propylene homo or random copolymer matrix component (1) and an elastomeric copolymer component (2) of propylene with one or more of ethylene and C4-C8 olefin comonomers, wherein the elastomeric (amorphous) copolymer component (2) is dispersed in said propylene homo or random copolymer matrix polymer (1). The presence of elastomeric phase or the so called inclusions are for instance visible by high resolution microscopy, like electron microscopy or atomic force microscopy. The random copolymer does not contain an elastomeric polymer phase dispersed therein.

Thereby, the term "propylene ethylene random copolymer" according to the present invention excludes all heterophasic systems. In other words the propylene ethylene random copolymer (rPP) does not comprise an elastomeric phase. Accordingly, the propylene ethylene random copolymer (rPP) is monophasic.

The presence of second phases or the so-called inclusions are for instance visible by high resolution microscopy, like electron microscopy or atomic force microscopy, or by dynamic mechanical thermal analysis (DMTA). Specifically in DMTA the presence of a multiphase structure can be identified by the presence of at least two distinct glass transition temperatures.

Accordingly, it is preferred that the propylene random copolymer (rPP) according to this invention has no glass transition temperature below -30 °C, more preferably below -25 °C, still more preferably below -20 °C.

Additionally or alternatively, it is preferred that the propylene random copolymer (rPP) according to this invention has a glass transition temperature in the range of -12 to +2 °C, more preferably in the range of -10 to +2 °C.

Further, it is preferred that the overall amount of 2,1 regio defects determined by $^{13}$C-NMR spectroscopy in the propylene random copolymer (rPP) is below 0.2 %, more preferably below 0.1 %.

The propylene random copolymer (rPP) used in the polypropylene composition (C) of the invention comprises at least one comonomer selected from $\alpha$-olefins with 2 or 4 to 8 carbon atoms.

The propylene random copolymer (rPP) may comprise only one type of comonomers or two or more types of comonomers.

The comonomers of said propylene random copolymer (rPP) are preferably selected from ethylene and $C_4$ to $C_6$ $\alpha$-olefins. A particular preferred comonomer is ethylene.

Especially suitable for the polypropylene composition (C) according to the present invention is a propylene random copolymer (rPP) with ethylene comonomer.

Preferably, the propylene random copolymer (rPP) has a comonomer content, preferably ethylene content, in the range of 1.0 to 15.0 mol-%, more preferably in the range of 2.0 to 10.0 mol-%, still more preferably in the range of 4.0 to 8.0 mol-%, yet more preferably in the range of 5.0 to 7.5 g/10 min, like in the range of 6.0 to 7.1 mol-%, based on the total content of monomeric units in the propylene random copolymer (rPP).

The propylene random copolymer (rPP) according to the present invention is featured by a rather low amount of xylene solubles. Accordingly, it is preferred that the propylene random copolymer (rPP) has a xylene soluble content (XCS) in the range of 1.0 to 15.0 wt.-%, more preferably in the range of 2.0 to 13.0 wt.-%, still more preferably in the range of 3.0 to 12.0 wt.-%, like in the range of 4.0 to 10.0 wt.-%.

Further, the propylene random copolymer (rPP) has a rather low melt flow rate. In particular, the propylene random copolymer (rPP) has a melt flow rate $MFR_2$ (230 °C, 2.16 kg) determined according to ISO 1133 in the range of 0.05 to 1.0 g/10 min, more preferably in the range of 0.1 to 0.6 g/10 min, still more preferably in the range of 0.15 to 0.5 g/10 min, like in the range of 0.2 to 0.4 g/10 min.

It is particularly preferred that the ratio MFR(C) / MFR(rPP) is in the range of 0.8 to 1.3, more preferably in the range of 0.9 to 1.2, still more preferably in the range 0.99 to 1.15, wherein MFR(C) is the melt flow rate $MFR_2$ (230 °C, 2.16 kg) determined according to ISO 1133 of the polypropylene composition (C) and MFR(rPP) is the melt flow rate $MFR_2$ (230 °C, 2.16 kg) determined according to ISO 1133 of the propylene random copolymer (rPP).

It is preferred that the propylene random copolymer (rPP) is thermo mechanically stable. Accordingly, it is preferred that the propylene random copolymer (rPP) has a melting temperature below 155 °C, more preferably in a range of 130 to 155 °C, still more preferably in a range of 140 to 150 °C, like in a range of 145 to 148 °C.

The propylene random copolymer (rPP) preferably has a flexural modulus at least 700 MPa, preferably at least 750 MPa, most preferably at least 780 MPa, determined according to ISO 178 at a test speed of 2mm/min and a force of 100 N on test specimens having a dimension of 80x10x4.0 $mm^3$ (length x width x thickness) prepared by injection moulding according to EN ISO 1873-2. The upper limit of the flexural modulus usually does not exceed 1400 MPa, and is preferably 1200 MPa or less. The polypropylene composition most preferably has a flexural modulus of 780 to 1100 MPa.

Further, the propylene random copolymer (rPP) preferably has a tensile stress at yield of at least 15 MPa, more preferably at least 20 MPa, most preferably at least 23 MPa, determined according to ISO 527-2:1996 using type 1A injection moulded test specimens prepared according to ISO 527-2:1996. The upper limit of the tensile stress at yield usually does not exceed 50 MPa and is preferably not higher than 45 MPa.

Further, it is preferred that the propylene random copolymer (rPP) used according to the present invention is a multimodal propylene random copolymer.

Usually, a propylene polymer comprising at least two propylene polymer fractions (components) which have been produced under different polymerization conditions resulting in different (weight average) molecular weights and/or different comonomer contents for the fractions, preferably conducted by polymerizing in multiple polymerization stages with different polymerization conditions, is referred to as "multimodal". The prefix "multi" relates to the number of different polymer fractions the propylene polymer is consisting of. As an example of multimodal polypropylene, a propylene polymer consisting of two fractions only is called "bimodal", whereas a propylene polymer consisting of three fractions only is called "trimodal".

Thereby the term "different" means that the propylene polymer fractions differ from each other in at least one property, preferably in the weight average molecular weight or comonomer content or both, more preferably at least in the weight average molecular weight.

The form of the molecular weight distribution curve, i.e. the appearance of the graph of the polymer weight fraction as function of its molecular weight, of such multimodal polymer is at least distinctly broadened in comparison with the curves for the individual fractions.

The propylene random copolymer (rPP) used in the present invention is preferably a multimodal propylene random copolymer. Accordingly, it is preferred that the propylene random copolymer (rPP) is at least a bimodal propylene random copolymer.

According to a first embodiment of the present invention, the propylene random copolymer (rPP) is a bimodal propylene random copolymer (rPP-2).

Said bimodal propylene random copolymer (rPP-2) preferably comprises a first propylene random copolymer (rPP-2a) and a second random propylene copolymer (rPP-2b) which is different from the first propylene random copolymer (rPP-2a).

It is preferred that the bimodal propylene random copolymer (rPP-2) comprises at least a first propylene random copolymer (rPP-2a) having a low molecular weight and a second propylene random copolymer (rPP-2b) having a high molecular weight. Thereby, the first propylene random copolymer (rPP-2a) has a lower weight average molecular weight than the second propylene random copolymer (rPP-2b).

It is well known that melt flow rate (MFR) of a polymer is an indication of the weight average molecular weight ($M_w$) of the polymer, the higher the MFR the lower the $M_w$ of the polymer and, respectively, the lower the MFR the higher the $M_w$ of the polymer. Accordingly, the MFR of the first propylene random copolymer (rPP-2a) is higher than the MFR of the second propylene random copolymer (rPP-2b).

In particular, the first propylene random copolymer (rPP-2a) has preferably a melt flow rate $MFR_2$ (230 °C, 2.16 kg) determined according to ISO 1133 in the range of 0.4 to 3.0 g/10 min, more preferably a $MFR_2$ in the range of 0.5 to 2.0 g/10 min, more preferably in the range of 0.6 to 1.5 g/10 min, still more preferably in the range of 0.75 to 1.0 g/10 min, and the overall bimodal propylene random copolymer (rPP-2) has preferably a melt flow rate $MFR_2$ (230 °C, 2.16 kg) determined according to ISO 1133 in the range of 0.01 to 5.0 g/10 min, more preferably in the range of 0.1 to 2.0 g/10 min, still more preferably in the range of 0.15 to 0.4 g/10 min.

Preferably, the first propylene random copolymer (rPP-2a) has a higher melt flow rate $MFR_2$ (230 °C, 2.16 kg) determined according to ISO 1133 than the overall bimodal propylene random copolymer (rPP-2)

Preferably both the first propylene random copolymer (rPP-2a) and the second propylene random copolymer (rPP-2b) are propylene random copolymer fractions which may have essentially the same or different comonomer content. It is preferred that the comonomer content of the second propylene random copolymer (rPP-2b) is equal to or higher than, preferably higher than the comonomer content of the first propylene random copolymer (rPP-2a).

The comonomer content of the first propylene random copolymer (rPP-2a) is preferably in the range of 1.0 to 5.0 mol-%, more preferably 2.0 to 4.5 mol-%, still more preferably in the range of 3.0 to 4.0 mol-%, like in the range of 3.5 to 4.5 mol-%, based on the total content of monomeric units in the first propylene random copolymer (rPP-2a).

The overall comonomer content of the bimodal propylene random copolymer (rPP-2) is preferably in the range of 3.0 to 10.0 mol-%, more preferably in the range of 4.0 to 9.0 mol-%, still more preferably in the range of 5.0 to 8.0 mol-%, like in the range of 6.0 to 6.5 mol-%, based on the total content of monomeric units in the bimodal propylene random copolymer (rPP-2).

Preferably, the first propylene random copolymer (rPP-2a) has a lower comonomer content than the overall bimodal propylene random copolymer (rPP-2)

It is preferred that the bimodal propylene random copolymer (rPP-2) is a propylene random copolymer comprising at least a propylene random copolymer having a low molecular weight (first propylene random copolymer (rPP-2a)) and a propylene random copolymer having a high molecular weight (second propylene random copolymer (rPP-2b)) and a higher content of comonomer than the first propylene random copolymer (rPP-2a). In this preferred embodiment the content of the comonomer in the first propylene random copolymer (rPP-2a) is within the preferred ranges as defined above.

Preferably, the first propylene random copolymer (rPP-2a) and the second propylene random copolymer (rPP-2b) are copolymers of propylene and ethylene and/or a $C_4$ to $C_8$ α-olefin. A particularly preferred comonomer is ethylene.

Preferably, the first propylene random copolymer (rPP-2a) and the second propylene random copolymer (rPP-2b) are copolymers of propylene with the same comonomer(s). More preferably, the first propylene random copolymer (rPP-2a) and the second propylene random copolymer (rPP-2b) are copolymers of propylene and ethylene.

The first propylene random copolymer (rPP-2a) and the second propylene random copolymer (rPP-2b) may include the same type of comonomer or different types of comonomers. It is preferred that both fractions include the same type of comonomer, like ethylene.

The first propylene random copolymer (rPP-2a) is preferably present in the propylene random copolymer in an amount of 30.0 to 50.0 wt.-%, more preferably in an amount of 35.0 to 47.0 wt.-% and most preferably in an amount of 37.0 to 47.0 wt.-%, based on the total amount of the propylene random copolymer (100 wt.-%), preferably, and the second propylene random copolymer (rPP-2b) is preferably present in the propylene random copolymer in an amount of 65.0 to 45.0 wt.-%, more preferably in an amount of 65.0 to 53.0 wt.-% and most preferably in an amount of 63.0 to 53.0 wt.-%, based on the total amount of the propylene random copolymer (100 wt.-%).

According to a second embodiment of the present invention, the propylene random copolymer (rPP) is a trimodal propylene random copolymer (rPP-3).

Said trimodal propylene random copolymer (rPP-3) preferably comprises a first propylene random copolymer (rPP-3a), a second propylene random copolymer (rPP-3b) which is different from the first propylene random copolymer (rPP-3a) and a third propylene random copolymer (rPP-3c) which is different from the first propylene random copolymer (rPP-3a) and the second propylene random copolymer (rPP-3b).

In particular, it is preferred that the trimodal propylene random copolymer (rPP-3) comprises a first propylene random copolymer (rPP-3a) having a melt flow rate $MFR_2$ determined according to ISO 1133 at 230 °C and a load of 2.16 kg in the range of 0.4 to 5.0 g/10 min, more preferably in the range of 0.5 to 3.0 g/10 min, still more preferably in the range of 0.5 to 1.2 g/10 min, a second propylene random copolymer (rPP-3b) and a third propylene random copolymer (rPP-3c), wherein the overall melt flow rate $MFR_2$ determined according to ISO 1133 at 230 °C of the trimodal propylene random copolymer (rPP-3) is in the range of 0.1 to 3.0 g/10 min, more preferably in the range of 0.2 to 2.0 g/10 min, still more preferably in the range of 0.3 to 1.0 g/10 min.

Preferably, the first propylene random copolymer (rPP-3a), the second propylene random copolymer (rPP-3b) and the third propylene random copolymer (rPP-3c) are copolymers of propylene with the same comonomer(s). More preferably, the first propylene random copolymer (rPP-3a), the second propylene random copolymer (rPP-3b) and the third propylene random copolymer (rPP-3c) are copolymers of propylene and ethylene.

The first propylene random copolymer (rPP-3a) preferably has a comonomer content in the range of 1.0 to 4.9 mol-%, more preferably in the range of 2.0 to 4.8 mol-%, still more preferably in the range of 3.0 to 4.7 mol-%, based on the total content of monomeric units in the first propylene random copolymer (rPP-3a).

Preferably, the comonomer content of the combined first propylene random copolymer (rPP-3a) and second propylene random copolymer (rPP-3b) is higher than the comonomer content of the first propylene random copolymer (rPP-3a). In particular, it is preferred that the comonomer content of the combined first propylene random copolymer (rPP-3a) and second propylene random copolymer (rPP-3b) is in the range of 5.0 to 10.0 mol-%, more preferably in the range of 5.5 to 7.0 mol-%, still more preferably in the range of 5.8 to 6.5 mol-%, based on the total content of monomeric units in the first propylene random copolymer (rPP-3a) and the second propylene random copolymer (rPP-3b).

Further, it is preferred that the overall comonomer content of the trimodal propylene random copolymer (rPP-3) is higher than the comonomer content of the combined first propylene random copolymer (rPP-3a) and second propylene random copolymer (rPP-3b).

The overall comonomer content of the trimodal propylene random copolymer (rPP-3) is in the range of 4.0 to 12.0 mol-%, more preferably in the range of 5.0 to 10.0 mol-%, still more preferably in the range of 6.0 to 7.5 mol-%, like in the range of 6.6 to 7.0 mol-%, based on the total content of monomeric units in the trimodal propylene random copolymer (rPP-3).

Preferably, the first propylene random copolymer (rPP-3a), the second propylene random copolymer (rPP-3b) and the third propylene random copolymer (rPP-3c) are copolymers of propylene and ethylene and/or a $C_4$ to $C_8$ α-olefin. A particularly preferred comonomer is ethylene.

The first propylene random copolymer (rPP-3a), the second propylene random copolymer (rPP-3b) and the third propylene random copolymer (rPP-3c) may include the same type of comonomer or different types of comonomers. It is preferred that all three fractions include the same type of comonomer, like ethylene.

It is preferred that the trimodal propylene random copolymer (rPP-3) comprises 30.0 to 50.0 wt.-%, more preferably 32.0 to 48.0 wt.-%, still more preferably 35.0 to 47.0 wt.-% of the first propylene random copolymer (rPP-3a), 42.0 to 60.0 wt.-%, more preferably 43.0 to 58.0 wt.-%, still more preferably 45.0 to 56.0 wt.-% of the second propylene random copolymer (rPP-3b) and 1.0 to 15.0 wt.-%, more preferably 3.0 to 13.0 wt.-%, still more preferably 5.0 to 12.0 wt.-% of the third propylene random copolymer (rPP-3c), based on the overall weight of the trimodal propylene random copolymer (rPP-3).

The propylene random copolymer (rPP), like the bimodal propylene random copolymer (rPP-2) or the trimodal propylene random copolymer (rPP-3), according to the present invention optionally comprises a nucleating agent (NU), preferably an $\alpha$-nucleating agent.

In case the propylene random copolymer (rPP), like the bimodal propylene random copolymer (rPP-2) or the trimodal propylene random copolymer (rPP-3), comprises an $\alpha$-nucleating agent, it is preferred that it is free of $\beta$-nucleating agents. The $\alpha$-nucleating agent is preferably selected from the group consisting of

> (i) salts of monocarboxylic acids and polycarboxylic acids, e.g. sodium benzoate or aluminum tert-butylbenzoate, and
> (ii) dibenzylidenesorbitol (e.g. 1,3 : 2,4 dibenzylidenesorbitol) and $C_1$-$C_8$-alkylsubstituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), or substituted nonitol-derivatives, such as 1,2,3,- trideoxy-4,6:5,7-bis-O-[(4-propylphenyl)methylene]-nonitol, and
> (iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and
> (iv) vinylcycloalkane polymer and vinylalkane polymer (as discussed in more detail below), and
> (v) mixtures thereof.

Such additives are generally commercially available and are described, for example, in "Plastic Additives Handbook", pages 871 to 873, 5th edition, 2001 of Hans Zweifel.

Preferably the propylene random copolymer (rPP), contains up to 5.0 wt.-% of the $\alpha$-nucleating agent. In a preferred embodiment, the propylene homopolymer contains not more than 500 ppm, more preferably of 0.025 to 200 ppm, more preferably of 0.1 to 200 ppm, still more preferably 0.3 to 200 ppm, most preferably 0.3 to 100 ppm of a $\alpha$-nucleating agent, in particular selected from the group consisting of dibenzylidenesorbitol (e.g. 1,3 : 2,4 dibenzylidene sorbitol), dibenzylidenesorbitol derivative, preferably dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, sodium 2,2'-methylenebis (4, 6,-di-tert-butylphenyl) phosphate, vinylcycloalkane polymer, vinylalkane polymer, and mixtures thereof.

Moreover, the polypropylene composition of the invention may contain additives including without limiting to, clarifiers, brighteners, acid scavengers and antioxidants, as well as slip agents, inorganic filler and UV light stabilizers. Each additive can be used e.g. in conventional amounts, the total amount of additives present in the polypropylene composition being preferably as defined below. Such additives are generally commercially available and are described, for example, in " Plastic Additives Handbook", 5th edition, 2001 of Hans Zweifel .

The total amount of optional further additives is preferably between 0.0001 and 2.5 wt%, more preferably between 0.0001 and 1.5 wt%, still more preferably between 0.0001 and 1.0 wt%, based on the total weight of the polypropylene composition (100 wt%). In case the optional additive(s) is added in an optional masterbatch, then the carrier material, e.g. carrier polymer, of the additive is calculated to the (total) amount of the additive(s), based on the total weight of the polypropylene composition (100 wt%).

The polypropylene composition of the invention is preferably produced in a continuous multistage process in a conventional manner. It is to be understood that as soon as the inventors have found the advantageous property balance resulting to the polypropylene composition, then for industrial scale production it is within the skills of a skilled person to adjust process parameters and controls to obtain the properties of the polypropylene composition. The process preferably comprises at least two polymerisation stages.

Accordingly a process for producing a polypropylene composition as described above or below, wherein the propylene random copolymer is polymerized in a multistage polymerization process in the presence of

> (I) a solid catalyst component comprising a magnesium halide, a titanium halide and an internal electron donor; and
> (II) a cocatalyst comprising an aluminum alkyl and optionally an external electron donor, the multistage process.

According to the first embodiment of the present invention wherein the propylene random copolymer (rPP) is a bimodal propylene random copolymer (rPP-2), said multistage process comprises the steps of

> (a1) continuously polymerizing propylene together with a comonomer selected from alpha-olefins with 2 or 4 to 8 carbon atoms, in a first polymerization stage by introducing streams of propylene, hydrogen and said comonomer into the first polymerization stage at a temperature of 60 to 80°C and a pressure of 3000 to 6500 kPa to produce a first propylene random copolymer, wherein said first propylene random copolymer has a melt flow rate $MFR_2$ (2.16 kg; 230°C; ISO 1133) of from 0.2 to 3.0 g/min;

(b1) withdrawing from the first polymerization stage a stream comprising said first propylene random copolymer and transferring said stream into a second polymerization stage;

(c1) polymerizing propylene together with a comonomer selected from alpha-olefins with 2 or 4 to 8 carbon atoms, in said second polymerization stage by introducing streams of propylene, said comonomer and optionally hydrogen into said second polymerization stage at a temperature of 70 to 90°C and a pressure of 1000 to 3000 kPa to produce a propylene random copolymer of said first propylene random copolymer and a second propylene random copolymer;

(d1) continuously withdrawing a stream comprising said propylene random copolymer from the second polymerization stage and optionally mixing said propylene random copolymer with additives; and

(e1) extruding said propylene random copolymer mixture into pellets.

In case of the alternative second embodiment of the present invention wherein the propylene random copolymer (rPP) is a trimodal propylene random copolymer (rPP-3), the above described multistage process comprises further steps of after the step (c1) and before the step (d1):

(d2) withdrawing from the second polymerization stage a stream comprising said first propylene random copolymer and said second propylene random copolymer and transferring said stream into a third polymerization stage;

(c2) polymerizing propylene together with a comonomer selected from alpha-olefins with 2 or 4 to 8 carbon atoms, in said third polymerization stage by introducing streams of propylene, said comonomer and optionally hydrogen into said third polymerization stage at a temperature of 60 to 100°C and a pressure of 1000 to 3000 kPa to produce a propylene random copolymer of said first propylene, second propylene random copolymer and third propylene random copolymer; and the stream of the propylene random copolymer obtained from the three polymerisation reactors is treated as described in above steps (d1) and (e1).

Said first propylene random copolymer preferably reflects the propylene random copolymer having a low molecular weight (rPP-2a) fraction of the bimodal propylene random copolymer (rPP-2) and said second propylene random copolymer preferably reflects the high molecular weight (rPP-2b) fraction of the propylene random copolymer as defined above. Thus, copolymer mixture comprising the first propylene random copolymer and a second propylene random copolymer preferably reflects a mixture of the low molecular weight (rPP-2a) fraction and the high molecular weight (rPP-2b) fraction of the propylene random copolymer as defined above.

In case of the alternative second embodiment of the present invention wherein the propylene random copolymer (rPP) is a trimodal propylene random copolymer (rPP-3), said first propylene random copolymer produced in the first polymerization stage preferably reflects the first propylene random copolymer (rPP-3a) and said second propylene random copolymer produced in the second polymerization stage preferably reflects the second propylene random copolymer (rPP-3b) of the trimodal propylene random copolymer (rPP-3). Said third propylene random copolymer produced in the third polymerization stage preferably reflects the third propylene random copolymer (rPP-3c) as defined above.

The amount of any prepolymer fraction thereby preferably adds to the amount of the low molecular weight fraction.

The copolymer mixture is formed by introducing the particles of the first propylene random copolymer, containing active catalyst dispersed therein, together with additional propylene and comonomer into the second polymerization stage, and, in case of the second embodiment, the reaction mixture obtained from the second polymerization stage into the third polymerization stage . This causes the second copolymer to form on the particles containing the first propylene random copolymer, and in case of the second embodiment, the third copolymer to form on the particles containing the first and the second propylene random copolymer . The second polymerization stage, and in case of the second embodiment, the third polymerization stage, is preferably conducted in a fluidized bed gas phase reactor. For this reason the terms "second/third polymerization stage" and "gas phase reactor 1/2" may be used interchangeably within the context of the present invention.

Also in the second polymerization stage, and in case of the second embodiment, the third polymerization stage, the content of the comonomers is controlled to obtain the desired comonomer content of the copolymer mixture. The obtained reaction mixture is the polymer of propylene random copolymer.

The process of the invention is described in further details below:
Thereby, conventional polymerization techniques, e.g. gas phase, solution phase, slurry or bulk polymerization can be used.

In general, a combination of slurry (or bulk) and at least one gas phase reactor is often preferred for the polymerisation of the propylene random copolymer. It is further preferred that the reactor order is slurry (or bulk) then one or more gas phase reactors.

In case of propylene polymerisation for slurry reactors, the reaction temperature will generally be in the range 60 to 110°C, e.g. 60 to 85 °C, the reactor pressure will generally be in the range 5 to 80 bar, e.g. 20 to 60 bar, and the residence time will generally be in the range 0.1 to 5 hours, e.g. 0.3 to 2 hours. The monomer is usually used as reaction medium.

For gas phase reactors, the reaction temperature used will generally be in the range 60 to 115 °C, e.g. 70 to 110 °C, the reactor pressure will generally be in the range 10 to 25 bar, and the residence time will generally be 0.5 to 8 hours, e.g. 0.5 to 4 hours. The gas used will be the monomer optionally as mixture with a non-reactive gas such as nitrogen or propane.

In addition to actual polymerisation steps and reactors, the process can contain any additional polymerisation steps, like prepolymerisation step, and any further after reactor handling steps as known in the art.

It is preferred that the propylene random copolymer is produced in a sequential polymerization process comprising at least two polymerization zones, alternatively at least three polymerization zones operating at different conditions to produce the propylene random copolymer. The polymerization zones may operate in slurry, solution, or gas phase conditions or their combinations. Suitable processes are disclosed, among others, in WO-A-98/58975 , WO-A-98/58976 , EP-A-887380 and WO-A-98/58977 .

In a preferred embodiment, the prepolymerization is conducted in a continuous manner as bulk slurry polymerization in liquid propylene, i.e. the liquid phase mainly comprises propylene, with minor amount of other reactants and optionally inert components dissolved therein. Preferably the prepolymerization is conducted in a continuous stirred tank reactor or a loop reactor, preferably in a loop reactor.

The prepolymerization reaction is typically conducted at a temperature of 0 to 60 °C, preferably from 10 to 50 °C, and more preferably from 20 to 45 °C.

The pressure in the prepolymerization reactor is not critical but must be sufficiently high to maintain the reaction mixture in liquid phase. Thus, the pressure may be from 20 to 100 bar, for example 30 to 70 bar.

The reaction conditions are well known in the art as disclosed, among others, in GB 1580635.

The first propylene random copolymer is produced by introducing a polymerization catalyst, optionally through the prepolymerization stage as disclosed above, into the first polymerization stage together with a first monomer mixture containing propylene and a comonomer selected from ethylene and alpha-olefins containing 4 to 8 carbon atoms.

The polymerization in the first polymerization zone is preferably conducted in slurry in a loop reactor. For this reason the terms "first polymerization stage" and "loop reactor" may be used interchangeably within the context of the present invention. Then the polymer particles formed in the polymerization, together with the catalyst fragmented and dispersed within the particles, are suspended in the fluid hydrocarbon. The slurry is agitated to enable the transfer of reactants from the fluid into the particles. In loop reactors the slurry is circulated with a high velocity along a closed pipe by using a circulation pump. Loop reactors are generally known in the art and examples are given, for instance, in US-A-4582816 , US-A-3405109 , US-A-3324093 , EP-A-479186 and US-A-5391654 .

Slurry polymerization is preferably a so called bulk polymerization. By "bulk polymerization" is meant a process where the polymerization is conducted in a liquid monomer essentially in the absence of an inert diluent.

The temperature in the slurry polymerization is typically from 50 to 110 °C, preferably from 60 to 80 °C and more preferably from 65 to 75 °C. The pressure is from 1 to 150 bar, preferably from 10 to 100 bar and most preferably from 30 to 65 bar.

The slurry may be withdrawn from the reactor either continuously or intermittently. A preferred way of intermittent withdrawal is the use of settling legs where the solids concentration of the slurry is allowed to increase before withdrawing a batch of the concentrated slurry from the reactor. The use of settling legs is disclosed, among others, in US-A-3374211 , US-A-3242150 and EP-A-1310295 . Continuous withdrawal is disclosed, among others, in EP-A-891990 , EP-A-1415999 , EP-A-1591460 and EP-A-1860125 . The continuous withdrawal may be combined with a suitable concentration method, as disclosed in EP-A-1860125 and EP-A-1591460 .

Into the slurry polymerization stage other components are also introduced as it is known in the art. Thus, hydrogen is used to control the molecular weight of the polymer. Process additives, such as antistatic agent, may be introduced into the reactor to facilitate a stable operation of the process.

The slurry is preferably conducted directly into a second polymerization stage, which preferably is a gas phase polymerization stage, to produce the second propylene random copolymer. By "directly" it is meant that the slurry is introduced from the loop reactor into the gas phase reactor without a flash step between the slurry and gas phase polymerization stages for removing at least a part of the reaction mixture from the polymer. Thereby, substantially the entire slurry stream withdrawn from the first polymerization stage is directed to the second polymerization stage. This kind of direct feed is described in EP-A-887379 , EP-A-887380 , EP-A-887381 and EP-A-991684 . It is preferred that the whole slurry stream withdrawn from the loop reactor is directed into the gas phase reactor without any separation step in between. However, it is within the scope of the present invention to take small samples or sample streams from the polymer or from the fluid phase or from both for analyzing the polymer and/or the composition of the reaction mixture. As understood by the person skilled in the art, the volume of such sample streams is small compared to the total slurry stream withdrawn from the loop reactor and typically much lower than 1 % by weight of the total stream, such as at most 0.1 % or 0.01 % or even 0.001 % by weight.

When the entire slurry stream from the first polymerization stage is introduced into the second polymerization stage and from the second polymerization stage into the third polymerization stage, respectively, then substantial amounts of propylene, comonomer and hydrogen are introduced into the second polymerization stage and the third polymerization stage together with the polymer.

Additional propylene and comonomer are typically introduced into the second and third polymerization stages. They are introduced to maintain a desired propylene concentration and to reach a desired ratio of comonomer to propylene in the fluidization gas. Even though the actual comonomer to monomer ratio that is needed to reach the desired content of comonomer in the polymer depends on the catalyst used in the process, the composition of the monomer and comonomer feeds is suitably adjusted so that the fluidization gas has a ratio of comonomer to propylene of about 10 to 100 mol/kmol, preferably from 15 to 70 mol/kmol.

It is also often necessary to introduce additional hydrogen into the second and third polymerization stages to control the MFR of the copolymer mixture, as well known to a skilled person.

In a fluidized bed gas phase reactor olefins are polymerized in the presence of a polymerization catalyst in an upwards moving gas stream.

The polymer bed is fluidized with the help of the fluidization gas comprising the olefin monomer, eventual comonomer(s), eventual chain growth controllers or chain transfer agents, such as hydrogen, and eventual inert gas, as well known to a skilled person.

The unreacted fluidization gas is removed from the top of the reactor and cooled in a heat exchanger to remove the heat of reaction. The gas is cooled to a temperature which is lower than that of the bed to prevent the bed from heating because of the reaction. It is possible to cool the gas to a temperature where a part of it condenses. When the liquid droplets enter the reaction zone they are vaporised. The vaporisation heat then contributes to the removal of the reaction heat. This kind of operation is called condensed mode and variations of it are disclosed, among others, in WO-A-2007/025640 , US-A-4543399 , EP-A-699213 and WO-A-94/25495 . It is also possible to add condensing agents into the recycle gas stream, as disclosed in EP-A-696293 . The condensing agents are non-polymerizable components, such as n-pentane, isopentane, n-butane or isobutane, which are at least partially condensed in the cooler.

The polymeric product may be withdrawn from the gas phase reactor either continuously or intermittently. Combinations of these methods may also be used. Continuous withdrawal is disclosed, among others, in WO-A-00/29452 . Intermittent withdrawal is disclosed, among others, in US-A-4621952 , EP-A-188125 , EP-A-250169 and EP-A-579426 .

Also antistatic agent(s) may be introduced into the gas phase reactor if needed. Suitable antistatic agents and methods to use them are disclosed, among others, in US-A-5026795, US-A-4803251 , US-A-4532311 , US-A-4855370 and EP-A-560035 . They are usually polar compounds and include, among others, water, ketones, aldehydes and alcohols.

Typically the fluidized bed polymerization reactor(s) is (are) operated at a temperature within the range of from 50 to 100 °C, preferably from 70 to 90 °C. The pressure is suitably from 10 to 40 bar, preferably from 10 to 30 bar.

The above described polymerization processes and equipment are well described in the literature.

As to catalyst, the propylene random copolymer can be produced by polymerisation in the presence of any conventional coordination catalyst including Ziegler-Natta, chromium and single site (like metallocene catalyst), preferably in the presence of a Ziegler-Natta catalyst. Such Ziegler-Natta catalysts typically comprise a solid transition metal component and a cocatalyst.

The solid Ziegler Natta catalyst component preferably comprises a transition metal component which preferably is a titanium halide and a magnesium halide. These compounds may be supported on a particulate support, such as inorganic oxide, like silica or alumina, or, usually, the magnesium halide to form above said solid support. Examples of such solid catalyst components are disclosed, among others, in WO 87/07620 , WO 92/21705 , WO 93/11165 , WO 93/11166 , WO 93/19100 , WO 97/36939 , WO 98/12234 , WO 99/33842 .

As is well known, the solid catalyst components for polymerising the propylene random copolymer typically comprise, in addition to the magnesium halide and transition metal compound, an electron donor (internal electron donor).

Suitable electron donors are, among others, esters of carboxylic acids, like phthalates, citraconates, and succinates. Also oxygen- or nitrogen-containing silicon compounds may be used. Examples of suitable compounds are shown in WO 92/19659 , WO 92/19653 , WO 92/19658 , US 4,347,160 , US 4,382,019 , US 4,435,550 , US 4,465,782 , US 4,473,660 , US 4,530,912 and US 4,560,671 .

Moreover, said solid catalyst components are preferably used in combination with well known external electron donors, including without limiting to, ethers, ketones, amines, alcohols, phenols, phosphines and silanes, for example organosilane compounds containing Si-OCOR, Si-OR, or Si-NR$_2$ bonds, having silicon as the central atom, and R is an alkyl, alkenyl, aryl, arylalkyl or cycloalkyl with 1-20 carbon atoms; and well known cocatalysts, which preferably comprise an aluminum alkyl compound as known in the art to polymerize the propylene random copolymer.

As outlined above, the propylene random copolymer (rPP), can be nucleated, preferably α-nucleated. As nucleating agent (NU), a polymeric nucleating agent, preferably a polymer of vinyl compound, more preferably a polymeric nucleating agent obtainable by polymerizing vinylcycloalkane monomers or vinylalkane monomers can be used.

The polymeric nucleating agent is more preferably a polymerized vinyl compound according to the following formula

$$CH_2=CH-CHR^1R^2 \qquad (I)$$

wherein $R^1$ and $R^2$ together form a 5- or 6-membered saturated, unsaturated or aromatic ring, optionally containing substituents, or independently represent an alkyl group comprising 1 to 4 carbon atoms, whereby in case $R^1$ and $R^2$ form an aromatic ring, the hydrogen atom of the $-CHR^1R^2$ moiety is not present.

Even more preferably, the polymeric nucleating agent is selected from: vinyl cycloalkane polymer, preferably vinyl cyclohexane (VCH) polymer, vinyl cyclopentane polymer, 3-methyl-1-butene polymer and vinyl-2-methyl cyclohexane polymer.

The most preferred nucleating agent is vinyl cyclohexane (VCH) polymer.

As mentioned above, in a preferred embodiment, nucleating agent is a polymeric nucleating agent, more preferably a polymer of vinyl compound according to the formula (I) as defined above, even more preferably vinyl cyclohexane (VCH) polymer.

The amount of nucleating agent preferably is not more than 10000 ppm by weight (means parts per million based on the total weight of the polypropylene composition (100 wt.-%), also abbreviated herein shortly as ppm), more preferably not more than 6000 ppm, even more preferably not more than 5000 ppm, based on the total weight of the propylene random copolymer (rPP) (100 wt.-%).

The amount of the nucleating agent still more preferably is not more than 500 ppm, preferably is from 0.025 to 200 ppm, and more preferably is from 0.1 to 200 ppm, more preferably is from 0.3 to 200 ppm, most preferably is from 0.3 to 100 ppm, based on the total weight of the propylene random copolymer (rPP) (100 wt.-%).

In the preferred embodiment the nucleating agent is a polymeric nucleating agent, most preferably a polymer of vinyl compound according to formula (I) as defined above, even more preferably vinyl cyclohexane (VCH) polymer as defined above, and the amount of said nucleating agent (B) is not more than 200 ppm, more preferably is from 0.025 to 200 ppm, and more preferably is from 0.1 to 200 ppm, more preferably is from 0.3 to 200 ppm, most preferably is from 0.3 to 100 ppm, based on the total weight of the propylene random copolymer (rPP) (100 wt.-%).

The nucleating agent may be introduced to the propylene random copolymer (rPP) e.g. during the polymerization process of the propylene random copolymer (rPP) or may be incorporated to the propylene random copolymer (rPP) by mechanical blending with a nucleated polymer, containing the polymeric nucleating agent (so-called master batch technology) or by mechanical blending of the propylene random copolymer (rPP) with the nucleating agent as such.

Thus, the nucleating agent can be introduced to the propylene random copolymer (rPP) during the polymerization process of the propylene random copolymer (rPP). The nucleating agent is preferably introduced to the propylene random copolymer (rPP) by first polymerizing the above defined vinyl compound according to formula (I) as defined above, even more preferably vinyl cyclohexane (VCH), in the presence of a catalyst system as described above, comprising a solid Ziegler Natta catalyst component, a cocatalyst and optional external donor, and the obtained reaction mixture of the polymer of the vinyl compound according to formula (I) as defined above, even more preferably vinyl cyclohexane (VCH) polymer, and the catalyst system is then used for producing the propylene random copolymer (rPP).

General preparation of such modified catalyst system is disclosed e.g. in EP 1 028 984 or WO 00/6831.

In another embodiment the polymeric nucleating agent is added with the so called masterbatch technology, where an already nucleated polymer, preferably a propylene homopolymer, containing the polymeric nucleating agent (masterbatch) is blended with the propylene random copolymer (rPP). Such a masterbatch is preferably prepared by polymerizing propylene in a sequential polymerization process.

The polyethylene (PE)
The inventive polypropylene composition (C) further comprises 0.1 to 20.0 wt.-% of a polyethylene (PE), such as 0.3 to 20.0 wt.-% of a polyethylene (PE).

Said polyethylene (PE) has a density equal or below 940 kg/m³. More preferably, the polyethylene (PE) has a density in a range of 910 to 940 kg/m³, still more preferably in a range of 912 to 928 kg/m³ in a range of 915 to 925 kg/m³.

Additionally, it is preferred that the polyethylene (PE) has a rather low melt flow rate. Accordingly, the melt flow rate $MFR_2$ (190 °C, 2.16 kg) measured according to ISO 1133 of the polyethylene (PE) is preferably in the range of 0.1 to 5.0 g/10 min, more preferably in the range of 0.2 to 2.0 g/10 min, still more preferably in the range of 0.5 to 1.8 g/10 min.

The choice of the polyethylene is not critical, provided that it meets the density and MFR as define above, below or in claims.

According to one preferred embodiment of the present invention, the polyethylene (PE) is a low density polyethylene (LDPE). The term LDPE has a well-known meaning in the polymer field and describes the nature of polyethylene produced in HP, i.e the typical features, such as different branching architecture, to distinguish the LDPE from PE produced in the presence of an olefin polymerisation catalyst (also known as a coordination catalyst).

Preferably, said low density polyethylene (LDPE) has a melting temperature in the range of 100 to 125 °C, more preferably in the range of 100 to 120 °C, still more preferably in the range of 100 to 115 °C.

Further, it is preferred that the low density polyethylene (LDPE) has a density in a range of 910 to 940 kg/m$^3$, more preferably in a range of 911 to 935 kg/m$^3$, still more preferably in a range of 912 to 928 kg/m$^3$ in a range of 915 to 925 kg/m$^3$.

The low density polyethylene (LDPE) can be an ethylene copolymer or an ethylene homopolymer, the latter being preferred, as well known in the art.

However, it is especially preferred that the low density polyethylene (LDPE) is an ethylene homopolymer.

The low density polyethylene (LDPE) is preferably a conventional LDPE polymer which can be commercially available or be prepared in a so called high pressure polymerization process using a radical initiator, typically peroxide, under a pressure. The polymerization can be effected e.g. in a tubular reactor or in autoclave reactor or in any combinations thereof. The high pressure polymerization processes, conditions and process control are well described in the literature and a skilled person can choose the conditions depending on the desired low density polyethylene (LDPE).

A suitable non-limiting example of commercially available low density polyethylenes is FT5230 of Borealis AG.

The additives

The polypropylene composition (C) of the present invention may include additives (AD). Typical additives are acid scavengers, antioxidants, colorants, light stabilisers, plasticizers, slip agents, anti-scratch agents, dispersing agents, processing aids, lubricants, pigments, fillers, and the like.

Such additives are commercially available and for example described in "Plastic Additives Handbook", 6th edition 2009 of Hans Zweifel (pages 1141 to 1190).

Furthermore, the term "additives (AD)" according to the present invention also includes carrier materials, in particular polymeric carrier materials.

The article

The present invention is further directed to an article comprising the polypropylene composition (C) as described above.

Said article comprises at least 90 wt.-%, more preferably at least 95 wt.-%, still more preferably 98 wt.-%, like 99 wt.-% of the polypropylene composition (C). It is especially preferred that the article consists of the polypropylene composition (C).

The polymer composition of the invention is highly suitable for pipe applications, preferably high pressure pipe applications. "Pipe application" includes pipe as such and fitting or other parts of the pipe and is referred herein shortly as "pipe".

Preferably, said article is a pipe, more preferably a high pressure pipe.

As used herein, the expression "high pressure pipe" refers to a pipe which, when used, is subjected to a positive pressure, that is the pressure inside the pipe being higher than the pressure outside the pipe.

The Pipe or fitting for the pipe can be produced in a conventional manner, e.g. using a pipe extrusion process, and commercially available pipe extrusion equipment. Such process and pipe extrusion equipment are well described in the literature of the art. The extrusion conditions of the polymer composition (C) of the invention can be chosen by a skilled person based on the desired end application.

The present invention will now be described in further detail by the examples provided below.

**EXAMPLES**

**1. Measuring methods**

The following definitions of terms and determination methods apply for the above general description of the invention as well as to the below examples unless otherwise defined.

**MFR$_2$ (230 °C)** is measured according to ISO 1133 (230 °C, 2.16 kg load).

**MFR$_{21}$ (230 °C)** is measured according to ISO 1133 (230 °C, 21.6 kg load).

**MFR$_2$ (190 °C)** is measured according to ISO 1133 (190 °C, 2.16 kg load).

**The xylene solubles (XCS, wt.-%):** Content of xylene cold solubles (XCS) is determined at 25 °C according ISO 16152; first edition; 2005-07-01. The part which remains insoluble is the xylene cold insoluble (XCI) fraction.

**Quantification of microstructure by NMR spectroscopy**

Quantitative nuclear-magnetic resonance (NMR) spectroscopy was used to quantify the comonomer content and comonomer sequence distribution of the polymers. Quantitative $^{13}$C {$^1$H} NMR spectra were recorded in the solution-state using a Bruker Advance III 400 NMR spectrometer operating at 400.15 and 100.62 MHz for $^1$H and $^{13}$C respectively. All spectra were recorded using a $^{13}$C optimised 10 mm extended temperature probehead at 125°C using nitrogen gas for all pneumatics. Approximately 200 mg of material was dissolved in 3 ml of *1,2*-tetrachloroethane-*d*$_2$ (TCE-*d*$_2$) along with chromium-(III)-acetylacetonate (Cr(acac)$_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra. Quantitative $^{13}$C{$^1$H} NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).
For polypropylene homopolymers all chemical shifts are internally referenced to the methyl isotactic pentad (mmmm) at 21.85 ppm.
Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.
The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).
Specifically the influence of regio defects and comonomer on the quantification of the tacticity distribution was corrected for by subtraction of representative regio defect and comonomer integrals from the specific integral regions of the stereo sequences.
The isotacticity was determined at the pentad level and reported as the percentage of isotactic pentad (mmmm) sequences with respect to all pentad sequences:

$$[\text{mmmm}] \% = 100 * (\text{ mmmm } / \text{ sum of all pentads })$$

The presence of 2,1 erythro regio defects was indicated by the presence of the two methyl sites at 17.7 and 17.2 ppm and confirmed by other characteristic sites.
Characteristic signals corresponding to other types of regio defects were not observed (Resconi, L., Cavallo, L., Fait, A., Piemontesi, F., Chem. Rev. 2000, 100, 1253).
The amount of 2,1 erythro regio defects was quantified using the average integral of the two characteristic methyl sites at 17.7 and 17.2 ppm:

$$P_{21e} = (\text{ I}_{e6} + \text{I}_{e8} ) / 2$$

The amount of 1,2 primary inserted propene was quantified based on the methyl region with correction undertaken for sites included in this region not related to primary insertion and for primary insertion sites excluded from this region:

$$P_{12} = \text{ I}_{CH3} + P_{12e}$$

The total amount of propene was quantified as the sum of primary inserted propene and all other present regio defects:

$$P_{total} = P_{12} + P_{21e}$$

The mole percent of 2,1 erythro regio defects was quantified with respect to all propene:

$$[21e]\ mol\% = 100 * (\ P_{21e}\ /\ P_{total}\ )$$

For copolymers characteristic signals corresponding to the incorporation of ethylene were observed (Cheng, H. N., Macromolecules 17 (1984), 1950).

With regio defects also observed (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) correction for the influence of such defects on the comonomer content was required.

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\%] = 100 * fE$$

The weight percent comonomer incorporation was calculated from the mole fraction:

$$E\ [wt\%] = 100 * (fE * 28.06)\ /\ ((fE * 28.06) + ((1-fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

**Number average molecular weight ($M_n$),' weight average molecular weight ($M_w$) and molecular weight distribution (MWD)**

Molecular weight averages (Mw, Mn), and the molecular weight distribution (MWD), i.e. the Mw/Mn (wherein Mn is the number average molecular weight and Mw is the weight average molecular weight), were determined by Gel Permeation Chromatography (GPC) according to ISO 16014-4:2003 and ASTM D 6474-99. A PolymerChar GPC instrument, equipped with infrared (IR) detector was used with 3 x Olexis and lx Olexis Guard columns from Polymer Laboratories and 1,2,4-trichlorobenzene (TCB, stabilized with 250 mg/L 2,6-Di tert butyl-4-methyl-phenol) as solvent at 160 °C and at a constant flow rate of 1 mL/min. 200 μL of sample solution were injected per analysis. The column set was calibrated using universal calibration (according to ISO 16014-2:2003) with at least 15 narrow MWD polystyrene (PS) standards in the range of 0,5 kg/mol to 11 500 kg/mol. Mark Houwink constants for PS, PE and PP used are as described per ASTM D 6474-99. All samples were prepared by dissolving 5.0 - 9.0 mg of polymer in 8 mL (at 160 °C) of stabilized TCB (same as mobile phase) for 2.5 hours for PP or 3 hours for PE at max. 160°C under continuous gentle shaking in the autosampler of the GPC instrument.

**DSC analysis, melting temperature ($T_m$) and heat of fusion ($H_f$), crystallization temperature ($T_c$) and heat of crystallization ($H_c$):** measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature ($T_c$) and heat of crystallization ($H_c$) are determined from the cooling step, while melting temperature ($T_m$) and heat of fusion ($H_f$) are determined from the second heating step.

**Density** is measured according to ISO 1183-187. Sample preparation is done by compression moulding in accordance with ISO 1872-2:2007.

**The glass transition temperature Tg** is determined by dynamic mechanical analysis according to ISO 6721-7. The measurements are done in torsion mode on compression moulded samples (40x10x1 mm$^3$) between -100 °C and +150 °C with a heating rate of 2 °C/min and a frequency of 1 Hz.

**Tensile properties** were determined on samples prepared from compression-moulded plaques having a sample thickness of 4 mm. Tensile modulus was determined according to ISO 527-2/1 B at 1 mm/min. and 23°CTo determine stress at yield and strain at yield, a speed of 50 mm/min. was used.

**Charpy notched impact test:** The charpy notched impact strength (Charpy NIS) was measured according to ISO 179 2C / DIN 53453 at 23 °C and 0 °C, using injection molded bar test specimens of 80x10x4 mm prepared in accordance with ISO 294-1:1996

**The flexural modulus** was determined in 3-point-bending according to ISO 178 on injection molded specimens of 80 × 10 × 4 mm prepared in accordance with ISO 294-1:1996.

**Shear thinning index SHI$_{2.7/210}$**

The characterization of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression molded plates using nitrogen atmosphere and setting a strain within the linear viscoelastic regime. The oscillatory shear tests were done at 190°C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \qquad (2)$$

where $\sigma_0$, and $\gamma_0$ are the stress and strain amplitudes, respectively; $\omega$ is the angular frequency; $\delta$ is the phase shift (loss angle between applied strain and stress response); t is the time.

Dynamic test results are typically expressed by means of several different rheological functions, namely the shear storage modulus, G', the shear loss modulus, G", the complex shear modulus, G*, the complex shear viscosity, $\eta$*, the dynamic shear viscosity, $\eta$', the out-of-phase component of the complex shear viscosity, $\eta$" and the loss tangent, tan $\eta$, which can be expressed as follows:

$$G' = \frac{\sigma_0}{\gamma_0} \cos\delta \ [Pa] \qquad (3)$$

$$G'' = \frac{\sigma_0}{\gamma_0} \sin\delta \ [Pa] \qquad (4)$$

$$G* = G' + iG'' \ [Pa] \qquad (5)$$

$$\eta^* = \eta' - i\eta'' \; [Pa \cdot s] \qquad (6)$$

$$\eta' = \frac{G''}{\omega} \; [Pa \cdot s] \qquad (7)$$

$$\eta'' = \frac{G'}{\omega} \; [Pa \cdot s] \qquad (8)$$

The determination of so-called Shear Thinning Index, which correlates with MWD and is independent of Mw, is done as described in equation 9.

$$SHI_{(x/y)} \;=\; \frac{\text{Eta* for } (G^* = x \, kPa)}{\text{Eta* for } (G^* = y \, kPa)} \qquad (9)$$

For example, the $SHI_{(2.7/210)}$ is defined by the value of the complex viscosity, in Pa s, determined for a value of $G^*$ equal to 2.7 kPa, divided by the value of the complex viscosity, in Pa s, determined for a value of $G^*$ equal to 210 kPa.

The values of storage modulus (G'), loss modulus (G"), complex modulus ($G^*$) and complex viscosity ($\eta^*$) were obtained as a function of frequency ($\omega$).

Thereby, e.g. $\eta^*_{300rad/s}$ (eta$^*_{300rad/s}$) is used as abbreviation for the complex viscosity at the frequency of 300 rad/s and $\eta^*_{0.05rad/s}$ (eta$^*_{0.05rad/s}$) is used as abbreviation for the complex viscosity at the frequency of 0.05 rad/s.

The loss tangent tan (delta) is defined as the ratio of the loss modulus (G") and the storage modulus (G') at a given frequency. Thereby, e.g. $tan_{0.05}$ is used as abbreviation for the ratio of the loss modulus (G") and the storage modulus (G') at 0.05 rad/s and $tan_{300}$ is used as abbreviation for the ratio of the loss modulus (G") and the storage modulus (G') at 300 rad/s. The elasticity balance $tan_{0.05}/tan_{300}$ is defined as the ratio of the loss tangent $tan_{0.05}$ and the loss tangent $tan_{300}$.

Besides the above mentioned rheological functions one can also determine other rheological parameters such as the so-called elasticity index $EI(x)$. The elasticity index $EI(x)$ is the value of the storage modulus (G') determined for a value of the loss modulus (G") of x kPa and can be described by equation 10.

$$EI(x) = G' \; for \; (G'' = x \, kPa) \; [Pa] \qquad (10)$$

For example, the $EI$(5kPa) is the defined by the value of the storage modulus (G'), determined for a value of G" equal to 5 kPa.

The viscosity $eta_{747}$ is measured at a very low, constant shear stress of 747 Pa and is inversely proportional to the gravity flow of the polyethylene composition, i.e. the higher $eta_{747}$ the lower the sagging of the polyethylene composition.

The polydispersity index, $PI$, is defined by equation 11.

$$PI = \frac{10^5}{G'(\omega_{COP})}, \qquad \omega_{COP} = \omega \; for \; (G' = G'') \qquad (11)$$

where $\omega_{COP}$ is the cross-over angular frequency, determined as the angular frequency for which the storage modulus, G', equals the loss modulus, G".

The values are determined by means of a single point interpolation procedure, as defined by Rheoplus software. In situations for which a given $G^*$ value is not experimentally reached, the value is determined by means of an extrapolation, using the same procedure as before. In both cases (interpolation or extrapolation), the option from Rheoplus *"Interpolate y-values to x-values from parameter"* and the *"logarithmic interpolation type"* were applied.

References:

[1] "Rheological characterization of polyethylene fractions", Heino, E.L., Lehtinen, A., Tanner J., Seppälä, J., Neste Oy, Porvoo, Finland, Theor. Appl. Rheol., Proc. Int. Congr. Rheol, 11th (1992), 1,360-362.

[2] "The influence of molecular structure on some rheological properties of polyethylene", Heino, E.L., Borealis Polymers Oy, Porvoo, Finland, Annual Transactions of the Nordic Rheology Society, 1995.
[3] "Definition of terms relating to the non-ultimate mechanical properties of polymers", Pure & Appl. Chem., Vol. 70, No. 3, pp. 701-754, 1998.

**Pressure test performance** is measured according to ISO 1167. In this test, a specimen is exposed to constant circumferential (hoop) stress of 16 MPa (for PP copolymers) respectively 21 MPa (for PP homopolymers) at elevated temperature of 20 °C in water-in-water or 4.5 MPa (for PP copolymers) respectively 3.5 MPa (for PP homopolymers) at a temperature of 95 °C in water-in-water. The time in hours to failure is recorded. The tests were performed on pipes produced on a conventional pipe extrusion equipment, the pipes having a diameter of 32 mm and a wall thickness of 3 mm.

## B. Examples

### 1. Preparation of propylene random copolymer (rPP) component: the bimodal propylene random copolymer (rPP-2) and the trimodal propylene random copolymer (rPP-3)

#### *Preparation of the catalyst*

First, 0.1 mol of $MgCl_2$x 3 EtOH was suspended under inert conditions in 250 ml of decane in a reactor at atmospheric pressure. The solution was cooled to the temperature of -15°C and 300 ml of cold $TiCl_4$ was added while maintaining the temperature at said level. Then, the temperature of the slurry was increased slowly to 20 °C. At this temperature, 0.02 mol of diethylhexylphthalate (DOP) was added to the slurry. After the addition of the phthalate, the temperature was raised to 135 °C during 90 minutes and the slurry was allowed to stand for 60 minutes. Then, another 300 ml of $TiCl_4$ was added and the temperature was kept at 135 °C for 120 minutes. After this, the catalyst was filtered from the liquid and washed six times with 300 ml heptane at 80 °C. Then, the solid catalyst component was filtered and dried. Catalyst and its preparation concept is described in general e.g. in patent publications EP 491 566 , EP 591 224 and EP 586 390 .

#### *Preparation of the bimodal propylene random copolymer (rPP-2)*

For the preparation of (rPP-2), triethylaluminum (TEAL), dicyclopentyldimethoxysilane (DCPDMS) as donor (Do), and the catalyst as produced above were added into oil, like mineral oil, e.g. Technol 68 (kinematic viscosity at 40 °C 62-74 cSt), in amounts so that Al/Ti was 3-4 mol/mol, and Al/Do was as well 3-4 mol/mol. Catalyst concentration in the final oil-catalyst slurry was 10-20 wt-%.

For the polymerization of (rPP-2), the catalyst was fed together with propylene to a prepolymerization reactor. Triethylaluminum was used as a cocatalyst and dicyclopentyldimethoxysilane as a donor. The slurry from the prepolymerization stage was directly fed to a loop reactor. Propylene, hydrogen and ethylene were further added to the loop reactor. The slurry from loop reactor was introduced to a gas phase reactor via direct feed line, i.e. without monomer flashing in-between the reactors. Propylene, ethylene and hydrogen were fed to the gas phase reactor.-The polymerization conditions and feeds are listed in Table 1.

Table 1: Preparation of rPP-2

| | | rPP-2 |
|---|---|---|
| Prepolymerization | | |
| TEAL/Ti | [mol/mol] | 200 |
| TEAL/donor | [mol/mol] | 30 |
| Temperature | [°C] | 30 |
| Pressure | [kPa] | 5300 |
| **Loop** | | |
| Temperature | [°C] | 70 |
| Pressure | [kPa] | 5300 |
| Split | [%] | 40 |
| H2/C3 ratio | [mol/kmol] | 0.65 |

(continued)

| Loop | | |
|---|---|---|
| MFR$_2$ | [g/10min] | 0.75 |
| XCS | [wt.-%] | 5.0 |
| C2 content | [mol-%] | 4.4 |
| **GPR 1** | | |
| Temperature | [°C] | 80 |
| Pressure | [kPa] | 1600 |
| Split | [%] | 60 |
| H2/C3 ratio | [mol/kmol] | 2.0 |
| Final MFR$_2$ | [g/10min] | 0.3 |
| Final XCS | [wt.-%] | 6.8 |
| Final C2 content | [mol-%] | 6.3 |
| C2 ethylene<br>H2/C3 ratio hydrogen / propylene ratio<br>GPR 1gas phase reactor<br>Loop Loop reactor | | |

### Preparation of the trimodal propylene random copolymer (rPP-3)

For the preparation of the trimodal propylene random copolymer (rPP-3), triethylaluminium (TEAL), dicyclopentyldimethoxysilane (DCPDMS) as donor (Do), catalyst as produced above and vinylcyclohexane (VCH) were added into oil, like mineral oil, e.g. Technol 68 (kinematic viscosity at 40 °C 62-74 cSt), in amounts so that Al/Ti was 3-4 mol/mol, Al/Do was as well 3-4 mol/mol, and weight ratio of VCH/solid catalyst was 1:1. The mixture was heated to 60 to 65 °C and allowed to react until the content of the unreacted vinylcyclohexane in the reaction mixture was less than 1000 ppm. Catalyst concentration in the final oil-catalyst slurry was 10 to 20 wt.-%.

For the polymerisation, the catalyst including polymerised VCH was fed together with propylene to a prepolymerisation reactor. Triethylaluminium was used as a cocatalyst and dicyclopentyldimethoxysilane as a donor. The polymerisation conditions and feeds are listed in Table 2. The slurry from the prepolymerisation stage was directly fed to a loop reactor. Propylene, hydrogen and ethylene were further added to the loop reactor. The polymerisation conditions and feeds are listed in Table 2. The slurry from loop reactor was introduced to a gas phase reactor via direct feed line, i.e. without monomer flashing in-between the reactors.

Propylene, ethylene and hydrogen were fed to the first gas phase reactor and further transferred to a second gas phase reactor. The final Poly-VCH content in the obtained final polymer was 200 ppm or less.

**Table** 2: Preparation of rPP-3

| | | **rPP-3** |
|---|---|---|
| Prepolymerization | | |
| TEAL feed | [g/t(C3)] | 740 |
| Donor feed | [g/t(PP)] | 13 |
| Temperature | [°C] | 33 |
| Pressure | [kPa] | 5300 |
| **Loop** | | |
| Temperature | [°C] | 72 |
| Pressure | [kPa] | 5000 |
| Split | [%] | 39 |

(continued)

| Loop | | |
|---|---|---|
| H2/C3 ratio | [mol/kmol] | 0.5 |
| MFR$_2$ | [g/10min] | 0.8 |
| XCS | [wt.-%] | 4.5 |
| C2 content | [mol-%] | 4.1 |
| **GPR 1** | | |
| Temperature | [°C] | 80 |
| Pressure | [kPa] | 2900 |
| Split | [%] | 51 |
| H2/C3 ratio | [mol/kmol] | 1.9 |
| C2 content | [mol-%] | 6.0 |
| **GPR 2** | | |
| Temperature | [°C] | 80 |
| Pressure | [kPa] | 2400 |
| Split | [%] | 10 |
| H2/C3 ratio | [mol/kmol] | 0.50 |
| Final MFR$_2$ | [g/10min] | 0.317 |
| Final XCS | [wt.-%] | 9.9 |
| Final C2 content | [mol-%] | 6.7 |
| C2 ethylene<br>H2/C3 ratio hydrogen / propylene ratio<br>GPR 1/2 1st/2nd gas phase reactor<br>Loop Loop reactor | | |

**2. The Polyethylene (PE) component: Low density polyethylene (LDPE)**

**LDPE** is the commercial low density polyethylene FT5230 by Borealis having a density of 923 kg/m$^3$, a melt flow rate MFR$_2$ (190 °C) of 0.75 g/10 min and a melting temperature of 112 °C.

**3. Preparation of the polypropylene composition (C)**

The propylene random copolymers (rPP-2) and (rPP-3) were melt blended with the low density polyethylene (LDPE) in amounts as indicated in Tables 3 and 4. The polymer pellets of the inventive and comparative compositions were prepared to test specimens for the mechanical and thermal tests as listed below or were extruded to pipes in order to test the processability of the compositions.
The properties of the comparative and inventive compositions are summarized in Tables 3 and 4.

**Table 3** Composition and properties of comparative example CE1 and inventive examples IE1 and IE2

| | | CE1 | IE1 | IE2 |
|---|---|---|---|---|
| rPP-2 | [wt.-%] | 100 | 98 | 95 |
| LDPE | [wt.-%] | 0 | 2 | 5 |
| MFR$_2$ | [g/10 min] | 0.30 | 0.30 | 0.32 |
| Tm | [°C] | 142.0 | 142.1 | 142.1 |
| ∆Hm | [J/g] | 75 | 76 | 77 |

(continued)

| | | CE1 | IE1 | IE2 |
|---|---|---|---|---|
| Tc | [°C] | 103.3 | 103.1 | 103.0 |
| ∆Hc | [J/g] | 80 | 79 | 83 |
| C2 | [mol-%] | 6.3 | 9.6 | 13.3 |
| XCS | [wt.-%] | 6.8 | 7.0 | 6.6 |
| Mw | [kg/mol] | 477 | 477 | 472 |
| MWD | [-] | 9.8 | 10.1 | 10.2 |
| Eta (0.05 rad/s) | [Pa*s] | | 68800 | 67900 |
| Eta (300 rad/s) | [Pa*s] | | 667 | 651 |
| SHI (2.7/210) | [-] | | 131.3 | 146.0 |
| Tensile Modulus | [MPa] | | 810 | 780 |
| Tensile stress at yield | [MPa] | | 25.0 | 24.3 |
| Tensile strain at yield | [%] | | 12.8 | 13.1 |
| Tensile stress at break | [MPa] | | 28.7 | 27.9 |
| Nominal strain at break | [%] | | 460 | 450 |
| Flexural modulus | [MPa] | | 900 | 880 |
| Charpy notched impact 23 °C | [kJ/m$^2$] | | 38.3 | 42.6 |
| Charpy notched impact 0 °C | [kJ/m$^2$] | | 2.48 | 3.05 |
| HPT (4.5 MPa / 95 °C) | [hr] | | 551 (B)[1] | 1071 (B)[1] |
| 1) brittle failure | | | | |

**Table 4** Composition and properties of comparative example CE2 and inventive examples IE3 and IE4

| | | CE2 | IE3 | IE4 |
|---|---|---|---|---|
| rPP-3 | [wt.-%] | 100 | 98 | 95 |
| LDPE | [wt.-%] | 0 | 2 | 5 |
| MFR$_2$ | [g/10 min] | 0.32 | 0.33 | 0.35 |
| Tm | [°C] | 147.8 | 147.9 | 147.9 |
| ∆Hm | [J/g] | 75 | 74 | 75 |
| Tc | [°C] | 117.8 | 117.7 | 117.7 |
| ∆Hc | [J/g] | 80 | 79 | 81 |
| C2 | [mol-%] | 7.0 | 10.0 | 14.0 |
| XCS | [wt.-%] | 9.9 | 10.1 | 11.4 |
| Mw | [kg/mol] | 469 | 475 | 472 |
| MWD | [-] | 10.1 | 10.6 | 10.9 |
| Eta (0.05 rad/s) | [Pa*s] | 61000 | 62300 | 61700 |
| Eta (300 rad/s) | [Pa*s] | 661 | 658 | 641 |
| SHI (2.7/210) | [-] | 117.6 | 122.0 | 134.0 |
| Tensile Modulus | [MPa] | 820 | 840 | 820 |

(continued)

|  |  | CE2 | IE3 | IE4 |
|---|---|---|---|---|
| Tensile stress at yield | [MPa] | 25.1 | 25.4 | 24.9 |
| Tensile strain at yield | [%] | 12.7 | 12.8 | 13.6 |
| Tensile stress at break | [MPa] | 26.2 | 28.9 | 27.4 |
| Nominal strain at break | [%] | 440 | 460 | 420 |
| Flexural modulus | [MPa] | 920 | 900 | 870 |
| Charpy notched impact 23 °C | [kJ/m$^2$] | 60.0 | 62.9 | 66.3 |

As can be gathered from Tables 3 and 4, the inventive compositions containing small amounts of the polyethylenes LDPE are featured by improved impact properties while the flexural modulus remains on a high level. The HPT performance of the pipes based on the bimodal propylene random copolymer (rPP-2) was good and not significantly affected by the polyethylene impact modifier.

**Claims**

1. Polypropylene composition (C), comprising

   i) 80.0 to 99.9 wt.-% of a propylene random copolymer (rPP) comprising propylene and at least one comonomer being ethylene and/or a $C_4$-$C_8$ α-olefin, said propylene random copolymer (rPP) having a melt flow rate MFR$_2$ determined according to ISO 1133 at 230 °C and a load of 2.16 kg in the range of 0.05 to 1.0 g/10 min, and
   ii) 0.1 to 20.0 wt.-% of a polyethylene (PE) having a density equal or below 940 kg/m$^3$, based on the overall weight of the polypropylene composition (C).

2. Polypropylene composition (C) according to claim 1,

   having a melt flow rate MFR$_2$ determined according to ISO 1133 at 230 °C and a load of 2.16 kg in the range of 0.05 to 1.0 g/10 min; or
   having a Charpy Notched Impact Strength at 23 °C of at least 15.0 kJ/m$^2$, determined according to ISO 179/1eA:2000; or
   having a xylene cold soluble content (XCS) in the range of 1.0 to 15.0 wt.-%, determined according to ISO 16152.

3. Polypropylene composition (C) according to claim 1, wherein the ratio MFR(C) / MFR(rPP) is in the range of 0.8 to 1.3, wherein MFR(C) is the melt flow rate MFR$_2$ determined according to ISO 1133 at 230 °C and a load of 2.16 kg of the polypropylene composition (C) and MFR(rPP) is the melt flow rate MFR$_2$ determined according to ISO 1133 at 230 °C and a load of 2.16 kg of the propylene random copolymer (rPP).

4. Polypropylene composition (C) according to claim 1, wherein the propylene random copolymer (rPP) has

   i) a comonomer content in the range of 1.0 to 15.0 mol-% and/or
   ii) a xylene cold soluble content (XCS) in the range of 1.0 to 15.0 wt.-%, determined according to ISO 16152.

5. Polypropylene composition (C) according to claim 1, wherein the propylene random copolymer

   i) has a melting temperature below 155 °C and/or
   ii) is monophasic.

6. Polypropylene composition (C) according to claim 1, wherein the propylene random copolymer (rPP) is at least bimodal.

7. Polypropylene composition (C) according to claim 6, wherein the propylene random copolymer (rPP) is a bimodal propylene random copolymer (rPP-2) comprising

i) 35.0 to 55.0 wt.-% of a first propylene random copolymer (rPP-2a), preferably having a melt flow rate $MFR_2$ determined according to ISO 1133 at 230 °C and a load of 2.16 kg in the range of 0.4 to 3.0 g/10 min, and
ii) 45.0 to 65.0 wt.-% of a second propylene random copolymer (rPP-2b) which is different from the first propylene random copolymer (rPP-2a),

wherein the bimodal random copolymer (rPP-2) preferably has an overall melt flow rate $MFR_2$ determined according to ISO 1133 at 230 °C and a load of 2.16 kg in the range of 0.01 to 5.0 g/10 min.

8. Polypropylene composition (C) according to claim 7, wherein

i) the first propylene random copolymer (rPP-2a) has a comonomer content in the range of 1.0 to 5.0 mol-%, and
ii) the bimodal random copolymer (rPP-2) has an overall comonomer content in the range of 3.0 to 10.0 mol-%,

and wherein the first propylene random copolymer (rPP-2a) and the second propylene random copolymer (rPP-2b) are copolymers of propylene and ethylene and/or a $C_4$ to $C_8$ $\alpha$-olefin.

9. Polypropylene composition (C) according to claim 6, wherein the propylene random copolymer (rPP) is a trimodal propylene random copolymer (rPP-3) comprising

i) 30.0 to 50.0 wt.-% of a first propylene random copolymer (rPP-3a), preferably having a melt flow rate $MFR_2$ determined according to ISO 1133 at 230 °C and a load of 2.16 kg in the range of 0.4 to 5.0 g/10 min,
ii) 42.0 to 60.0 wt.-% of a second propylene random copolymer (rPP-3b) which is different from the first propylene random copolymer (rPP-3a), and
iii) 1.0 to 15.0 wt.-% of a third propylene random copolymer (rPP-3c) which is different from the first propylene random copolymer (rPP-3a) and the second propylene random copolymer (rPP-3b),

wherein the overall melt flow rate $MFR_2$ determined according to ISO 1133 at 230 °C of the trimodal propylene random copolymer (rPP-3) is preferably in the range of 0.1 to 3.0 g/10 min.

10. Polypropylene composition (C) according to claim 9, wherein

i) the first propylene random copolymer (rPP-3a) has a comonomer content in the range of 1.0 to 4.9 mol-%, and
ii) the trimodal propylene random copolymer (rPP-3) has an overall comonomer content in the range of 4.0 to 12.0 mol-%,

wherein the propylene random copolymer (rPP-3a), the propylene random copolymer (rPP-3b) and the propylene random copolymer (rPP-3c) are copolymers of propylene and ethylene and/or a $C_4$ to $C_8$ $\alpha$-olefin.

11. Polypropylene composition (C) according to claim 1, wherein the propylene random copolymer (rPP) consists of a copolymer of propylene and ethylene.

12. Polypropylene composition (C) according to claim 1, wherein the polyethylene (PE) has a melt flow rate $MFR_2$ determined according to ISO 1133 at 190 °C and a load of 2.16 kg in the range of 0.1 to 6.0 g/10 min; or wherein the polyethylene (PE) is a low density polyethylene (LDPE), preferably being an ethylene homopolymer.

13. Polypropylene composition (C) according to claim 1, wherein the sum of the propylene random copolymer (rPP) and the polyethylene (PE) is at least 80 wt.-%, based on the total amount of the polypropylene composition (C).

14. Article, comprising the polypropylene composition (C) according to any one of claims 1 to 13.

15. Article according to claim 14, wherein the article is a pipe, preferably consisting of the polypropylene composition (C).

**Patentansprüche**

1. Polypropylenzusammensetzung (C), umfassend

i) 80,0 bis 99,9 Gew.-% eines statistischen Propylencopolymers (rPP), umfassend Propylen und mindestens ein Comonomer, bei dem es sich um Ethylen und/oder ein $C_4$-$C_8$-a-Olefin handelt, wobei das statistische Propylencopolymer (rPP) eine Schmelzflussrate $MFR_2$, bestimmt nach ISO 1133 bei 230 °C und einer Belastung von 2,16 kg, im Bereich von 0,05 bis 1,0 g/10 min aufweist, und

ii) 0,1 bis 20,0 Gew.-% eines Polyethylens (PE) mit einer Dichte von 940 kg/m$^3$ oder weniger,

bezogen auf das Gesamtgewicht der Polypropylenzusammensetzung (C).

2.  Polypropylenzusammensetzung (C) gemäß Anspruch 1,

    mit einer Schmelzflussrate MFR2, bestimmt nach ISO 1133 bei 230 °C und einer Belastung von 2,16 kg, im Bereich von 0,05 bis 1,0 g/10 min; oder

    mit einer Charpy-Kerbschlagzähigkeit bei 23 °C von mindestens 15,0 kJ/m$^2$, bestimmt nach ISO 179/1eA:2000, oder

    mit einem Xylol kalt löslichen Gehalt (XCS) im Bereich von 1,0 bis 15,0 Gew.-%, bestimmt nach ISO 16152.

3.  Polypropylenzusammensetzung (C) gemäß Anspruch 1, wobei das Verhältnis MFR(C) / MFR(rPP) im Bereich von 0,8 bis 1,3 liegt, wobei MFR(C) die Schmelzflussrate $MFR_2$ der Polypropylenzusammensetzung (C) ist, bestimmt nach ISO 1133 bei 230 °C und einer Belastung von 2,16 kg, und MFR(rPP) die Schmelzflussrate $MFR_2$ des statistischen Propylencopolymers (rPP) ist, bestimmt nach ISO 1133 bei 230 °C und einer Belastung von 2,16 kg des statistischen Propylencopolymers (rPP).

4.  Polypropylenzusammensetzung (C) gemäß Anspruch 1, wobei das statistische Propylencopolymer (rPP) aufweist

    i) einen Comonomergehalt im Bereich von 1,0 bis 15,0 Mol-% und/oder
    ii) einen Xylol kalt löslichen Gehalt (XCS) im Bereich von 1,0 bis 15,0 Gew.-%, bestimmt nach ISO 16152.

5.  Polypropylenzusammensetzung (C) gemäß Anspruch 1, wobei das statistische Propylencopolymer

    i) eine Schmelztemperatur unter 155 °C aufweist und/oder
    ii) monophasisch ist.

6.  Polypropylenzusammensetzung (C) gemäß Anspruch 1, wobei das statistische Propylencopolymer (rPP) mindestens bimodal ist.

7.  Polypropylenzusammensetzung (C) gemäß Anspruch 6 , wobei das statistische Propylencopolymer (rPP) ein bimodales statistisches Propylencopolymer (rPP-2) ist, umfassend

    i) 35,0 bis 55,0 Gew.-% eines ersten statistischen Propylencopolymers (rPP-2a), vorzugsweise mit einer Schmelzflussrate $MFR_2$, bestimmt nach ISO 1133 bei 230 °C und einer Belastung von 2,16 kg, im Bereich von 0,4 bis 3,0 g/10 min, und
    ii) 45,0 bis 65,0 Gew.-% eines zweiten statistischen Propylencopolymers (rPP-2b), das sich von dem ersten statistischen Propylencopolymer (rPP-2a) unterscheidet,

    wobei das bimodale statistische Copolymer (rPP-2) vorzugsweise eine Gesamtschmelzflussrate $MFR_2$, bestimmt nach ISO 1133 bei 230 °C und einer Belastung von 2,16 kg, im Bereich von 0,01 bis 5,0 g/10 min aufweist.

8.  Polypropylenzusammensetzung (C) gemäß Anspruch 7, wobei

    i) das erste statistische Propylencopolymer (rPP-2a) einen Comonomergehalt im Bereich von 1,0 bis 5,0 Mol-% aufweist, und
    ii) das bimodale statistische Copolymer (rPP-2) einen Gesamtcomonomergehalt im Bereich von 3,0 bis 10,0 Mol-% aufweist,

    und wobei das erste statistische Propylencopolymer (rPP-2a) und das zweite statistische Propylencopolymer (rPP-2b) Copolymere aus Propylen und Ethylen und/oder einem $C_4$ bis $C_8$ $\alpha$-Olefin sind.

9.  Polypropylenzusammensetzung (C) gemäß Anspruch 6, wobei das statistische Propylencopolymer (rPP) ein trimodales statistisches Propylencopolymer (rPP-3) ist, umfassend

i) 30,0 bis 50,0 Gew.-% eines ersten statistischen Propylencopolymers (rPP-3a), vorzugsweise mit einer Schmelzflussrate MFR$_2$, bestimmt nach ISO 1133 bei 230 °C und einer Belastung von 2,16 kg, im Bereich von 0,4 bis 5,0 g/10 min,

ii) 42,0 bis 60,0 Gew.-% eines zweiten statistischen Propylencopolymers (rPP-3b), das sich von dem ersten statistischen Propylencopolymer (rPP-3a) unterscheidet, und

iii) 1,0 bis 15,0 Gew.-% eines dritten statistischen Propylencopolymers (rPP-3c), das sich von dem ersten statistischen Propylencopolymer (rPP-3a) und dem zweiten statistischen Propylencopolymer (rPP-3b) unterscheidet,

wobei die nach ISO 1133 bei 230 °C bestimmte Gesamtschmelzflussrate MFR$_2$ des trimodalen statistischen Propylencopolymers (rPP-3) vorzugsweise im Bereich von 0,1 bis 3,0 g/10 min liegt.

**10.** Polypropylenzusammensetzung (C) gemäß Anspruch 9, wobei

i) das erste statistische Propylencopolymer (rPP-3a) einen Comonomergehalt im Bereich von 1,0 bis 4,9 Mol-% aufweist und

ii) das trimodale statistische Propylencopolymer (rPP-3) einen Gesamtcomonomergehalt im Bereich von 4,0 bis 12,0 Mol-% aufweist,

wobei das statistische Propylencopolymer (rPP-3a), das statistische Propylencopolymer (rPP-3b) und das statistische Propylencopolymer (rPP-3c) Copolymere aus Propylen und Ethylen und/oder einem C$_4$ bis C$_8$ α-Olefin sind.

**11.** Polypropylenzusammensetzung (C) gemäß Anspruch 1, wobei das statistische Propylencopolymer (rPP) aus einem Copolymer von Propylen und Ethylen besteht.

**12.** Polypropylenzusammensetzung (C) gemäß Anspruch 1,

wobei das Polyethylen (PE) eine Schmelzflussrate MFR$_2$, bestimmt nach ISO 1133 bei 190 °C und einer Belastung von 2,16 kg, im Bereich von 0,1 bis 6,0 g/10 min aufweist; oder

wobei das Polyethylen (PE) ein Polyethylen niedriger Dichte (LDPE) ist, das vorzugsweise ein Ethylenhomopolymer ist.

**13.** Polypropylenzusammensetzung (C) gemäß Anspruch 1, wobei die Summe aus dem statistischen Propylen-Copolymer (rPP) und dem Polyethylen (PE) mindestens 80 Gew.-%, bezogen auf die Gesamtmenge der Polypropylenzusammensetzung (C), beträgt.

**14.** Gegenstand, umfassend die Polypropylenzusammensetzung (C) nach einem der Ansprüche 1 bis 13.

**15.** Gegenstand gemäß Anspruch 14, wobei der Gegenstand ein Rohr ist, das vorzugsweise aus der Polypropylenzusammensetzung (C) besteht.

**Revendications**

**1.** Composition de polypropylène (C) comprenant

i) 80,0 à 99 % en poids d'un copolymère aléatoire de propylène (rPP) comprenant du propylène et au moins un comonomère qui est l'éthylène et/ou une α-oléfine en C$_4$ à C$_8$, ledit copolymère aléatoire de propylène (rPP) ayant un indice de fluage MFR$_2$, déterminé conformément à la norme ISO 1133 à 230°C et sous une charge de 2,16 kg, dans la plage de 0,05 à 1,0 g/10 min, et

ii) 0,1 à 20,0 % en poids d'un polyéthylène (PE) ayant une masse volumique égale ou inférieure à 940 kg/m$^3$,

basés sur le poids global de la composition de polypropylène (C).

**2.** Composition de polypropylène (C) selon la revendication 1,

ayant un indice de fluage MFR$_2$, déterminé conformément à la norme ISO 1133 à 230°C et sous une charge de 2,16 kg, dans la plage de 0,05 à 1,0 g/10 min ; ou

ayant une résistance au choc sur barreau entaillé Charpy à 23°C, déterminée conformément à la norme ISO 179/1eA:2000, d'au moins 15,0 kJ/m$^2$ ; ou

ayant une teneur soluble à froid dans le xylène (XCS), déterminée conformément à la norme ISO 16152, dans la plage de 1,0 à 15,0 % en poids.

3. Composition de polypropylène (C) selon la revendication 1, dans laquelle le rapport MFR(C)/MFR(rPP) est dans la plage de 0,8 à 1,3, dans laquelle MFR(C) est l'indice de fluage MFR$_2$, déterminé conformément à la norme ISO 1133 à 230°C et sous une charge de 2,16 kg, de la composition de polypropylène (C), et MFR(rPP) est l'indice de fluage MFR$_2$, déterminé conformément à la norme ISO 1133 à 230°C et sous une charge de 2,16 kg, du copolymère aléatoire de propylène (rPP).

4. Composition de polypropylène (C) selon la revendication 1, dans laquelle le copolymère aléatoire de propylène (rPP) a

i) une teneur en comonomères dans la plage de 1,0 à 15,0 % en moles, et/ou
ii) une teneur soluble à froid dans le xylène (XCS), déterminée conformément à la norme ISO 16152, dans la plage de 1,0 à 15,0 % en poids.

5. Composition de polypropylène (C) selon la revendication 1, dans laquelle le copolymère aléatoire de propylène

i) a un point de fusion inférieur à 155°C, et/ou
ii) est monophasique.

6. Composition de polypropylène (C) selon la revendication 1, dans laquelle le copolymère aléatoire de propylène (rPP) est au moins bimodal.

7. Composition de polypropylène (C) selon la revendication 6, dans laquelle le copolymère aléatoire de propylène (rPP) est un copolymère aléatoire de propylène bimodal (rPP-2) comprenant

i) 35,0 à 55,0 % en poids d'un premier copolymère aléatoire de propylène (rPP-2a), ayant de préférence un indice de fluage MFR$_2$, déterminé conformément à la norme ISO 1133 à 230°C et sous une charge de 2,16 kg, dans la plage de 0,4 à 3,0 g/10 min, et
ii) 45,0 à 65,0 % en poids d'un deuxième copolymère aléatoire de propylène (rPP-2b) qui est différent du premier copolymère aléatoire de propylène (rPP-2a),

dans laquelle le copolymère aléatoire bimodal (rPP-2) a de préférence un indice de fluage MFR$_2$ global, déterminé conformément à la norme ISO 1133 à 230°C et sous une charge de 2,16 kg, dans la plage de 0,01 à 5,0 g/10 min.

8. Composition de polypropylène (C) selon la revendication 7, dans laquelle

i) le premier copolymère aléatoire de propylène (rPP-2a) a une teneur en comonomères dans la plage de 1,0 à 5,0 % en moles, et
ii) le copolymère aléatoire bimodal (rPP-2) a une teneur globale en comonomères dans la plage de 3,0 à 10,0 % en moles,

et dans laquelle le premier copolymère aléatoire de propylène (rPP-2a) et le deuxième copolymère aléatoire de propylène (rPP-2b) sont des copolymères de propylène et d'éthylène et/ou d'une $\alpha$-oléfine en C$_4$ à C$_8$.

9. Composition de polypropylène (C) selon la revendication 6, dans laquelle le copolymère aléatoire de propylène (rPP) est un copolymère aléatoire de propylène trimodal (rPP-3) comprenant

i) 30,0 à 50,0 % en poids d'un premier copolymère aléatoire de propylène (rPP-3a), ayant de préférence un indice de fluage MFR$_2$, déterminé conformément à la norme ISO 1133 à 230°C et sous une charge de 2,16 kg, dans la plage de 0,4 à 5,0 g/10 min,
ii) 42,0 à 60,0 % en poids d'un deuxième copolymère aléatoire de propylène (rPP-3b) qui est différent du premier copolymère aléatoire de propylène (rPP-3a), et

iii) 1,0 à 15,0 % en poids d'un troisième copolymère aléatoire de propylène (rPP-3c) qui est différent du premier copolymère aléatoire de propylène (rPP-3a) et du deuxième copolymère aléatoire de propylène (rPP-3b),

dans laquelle l'indice de fluage MFR$_2$ global, déterminé conformément à la norme ISO 1133 à 230°C du copolymère aléatoire de propylène trimodal (rPP-3) est de préférence dans la plage de 0,1 à 3,0 g/10 min.

10. Composition de polypropylène (C) selon la revendication 9, dans laquelle

i) le premier copolymère aléatoire de propylène (rPP-3a) a une teneur en comonomères dans la plage de 1,0 à 4,9 % en moles, et
ii) le copolymère aléatoire de propylène trimodal (rPP-3) a une teneur globale en comonomères dans la plage de 4,0 à 12,0 % en moles,

dans laquelle le copolymère aléatoire de propylène (rPP-3a), le copolymère aléatoire de propylène (rPP-3b) et le copolymère aléatoire de propylène (rPP-3c) sont des copolymères de propylène et d'éthylène et/ou d'une $\alpha$-oléfine en C$_4$ à C$_8$.

11. Composition de polypropylène (C) selon la revendication 1, dans laquelle le copolymère aléatoire de propylène (rPP) consiste en un copolymère de propylène et d'éthylène.

12. Composition de polypropylène (C) selon la revendication 1,

dans laquelle le polyéthylène (PE) a un indice de fluage MFR$_2$, déterminé conformément à la norme ISO 1133 à 190°C et sous une charge de 2,16 kg, dans la plage de 0,1 à 6,0 g/10 min ; ou
dans laquelle le polyéthylène (PE) est un polyéthylène basse densité (LDPE), qui est de préférence un homopolymère d'éthylène.

13. Composition de polypropylène (C) selon la revendication 1, dans laquelle la somme du copolymère aléatoire de propylène (rPP) et du polyéthylène (PE) est d'au moins 80 % en poids basés sur la quantité totale de la composition de polypropylène (C).

14. Article comprenant la composition de polypropylène (C) selon l'une quelconque des revendications 1 à 13.

15. Article selon la revendication 14, dans lequel l'article est un tuyau, de préférence constitué de la composition de polypropylène (C).

**REFERENCES CITED IN THE DESCRIPTION**

**Patent documents cited in the description**

- WO 9858975 A
- WO 9858976 A
- EP 887380 A
- WO 9858977 A
- GB 1580635 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- EP 1860125 A
- EP 887379 A
- EP 887381 A
- EP 991684 A
- WO 2007025640 A
- US 4543399 A
- EP 699213 A
- WO 9425495 A
- EP 696293 A
- WO 0029452 A
- US 4621952 A
- EP 188125 A
- EP 250169 A

- EP 579426 A
- US 5026795 A
- US 4803251 A
- US 4532311 A
- US 4855370 A
- EP 560035 A
- WO 8707620 A
- WO 9221705 A
- WO 9311165 A
- WO 9311166 A
- WO 9319100 A
- WO 9736939 A
- WO 9812234 A
- WO 9933842 A
- WO 9219659 A
- WO 9219653 A
- WO 9219658 A
- US 4347160 A
- US 4382019 A
- US 4435550 A
- US 4465782 A
- US 4473660 A
- US 4530912 A
- US 4560671 A
- EP 1028984 A
- WO 006831 A
- EP 491566 A
- EP 591224 A
- EP 586390 A

**Non-patent literature cited in the description**

- **HANS ZWEIFEL.** Plastic Additives Handbook. 2001, 871-873
- **HANS ZWEIFEL.** Plastic Additives Handbook. 2001
- **HANS ZWEIFEL.** Plastic Additives Handbook. 2009, 1141-1190
- **SINGH, G. ; KOTHARI, A. ; GUPTA, V.** *Polymer Testing,* 2009, vol. 28 (5), 475
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128

- **CHENG, H. N.** *Macromolecules,* 1984, vol. 17, 1950
- **RESCONI, L. ; CAVALLO, L. ; FAIT, A. ; PIEMONTESI, F.** *Chem. Rev.,* 2000, vol. 100, 1253
- **WANG, W-J. ; ZHU, S.** *Macromolecules,* 2000, vol. 33, 1157
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- **KAKUGO, M. ; NAITO, Y. ; MIZUNUMA, K. ; MIYATAKE, T.** *Macromolecules,* 1982, vol. 15, 1150

- **HEINO, E.L. ; LEHTINEN, A. ; TANNER J. ; SEPPÄLÄ, J.** Rheological characterization of polyethylene fractions. *Theor. Appl. Rheol., Proc. Int. Congr. Rheol,* 1992, vol. 1, 360-362

- **HEINO, E.L.** The influence of molecular structure on some rheological properties of polyethylene. *Borealis Polymers Oy, Porvoo, Finland, Annual Transactions of the Nordic Rheology Society,* 1995
- Definition of terms relating to the non-ultimate mechanical properties of polymers. *Pure & Appl. Chem.,* 1998, vol. 70 (3), 701-754